# EUROPEAN PATENT SPECIFICATION

(11) **EP 2 190 054 B1**
(45) Date of publication and mention of the grant of the patent: **26.10.2016**
(21) Application number: 08830364.9
(22) Date of filing: 11.09.2008
(51) Int. Cl.: H01M 10/052, H01M 10/0525, H01M 10/0567, H01M 10/0569, H01M 4/38, H01M 4/58, H01M 4/583

(54) **NONAQUEOUS ELECTROLYTE SOLUTION FOR SECONDARY BATTERY AND NONAQUEOUS ELECTROLYTE SECONDARY BATTERY**
WASSERFREIE ELEKTROLYTLÖSUNG FÜR SEKUNDÄRBATTERIE UND SEKUNDÄRBATTERIE MIT WASSERFREIEM ELEKTROLYT
SOLUTION ÉLECTROLYTIQUE NON AQUEUSE POUR BATTERIE SECONDAIRE ET BATTERIE SECONDAIRE À ÉLECTROLYTE NON AQUEUX

(30) Priority: 12.09.2007 JP 2007236873
(43) Date of publication of application: 26.05.2010
(73) Proprietor: Mitsubishi Chemical Corporation, Chiyoda-ku Tokyo 100-8251 (JP)
(72) Inventor: OHASHI, Youichi, Inashiki-gun, Ibaraki 300-0332 (JP); FUJII, Takashi, Inashiki-gun, Ibaraki 300-0332 (JP); KINOSHITA, Shinichi, Inashiki-gun, Ibaraki 300-0332 (JP); WINTER, Martin, 48149 Münster (DE); STERNAD, Michael, 8010 Graz (AT)
(74) Representative: Hoffmann Eitle
(86) International application number: PCT/JP2008/066459
(87) International publication number: WO 2009/035054

(56) References cited:
- WO-A1-2006/137224
- DE-A1- 10 042 149
- JP-A- 2002 008 719
- JP-A- 2007 042 329
- US-A- 4 578 514
- US-B1- 6 905 762
- ZHANG ET AL: "Aromatic isocyanate as a new type of electrolyte additive for the improved performance of Li-ion batteries", JOURNAL OF POWER SOURCES, ELSEVIER SA, CH, vol. 163, no. 1, 7 December 2006 (2006-12-07), pages 567-572, XP027938506, ISSN: 0378-7753 [retrieved on 2006-12-07]

## Description

### Field of the Invention

The present invention relates to a nonaqueous electrolytic solution for a secondary battery and a secondary battery including the nonaqueous electrolytic solution. More specifically, the present invention relates to a nonaqueous electrolytic solution containing a specific component and thus improving the cycle characteristics of a lithium secondary battery, and to a lithium secondary battery including the specific component-containing electrolytic solution.

### Background of the Invention.

With the recent trend toward size reduction in electronic appliances, secondary batteries have been increasingly required to have a higher capacity. Thus, attention has been focused on lithium-ion secondary batteries, which have a higher energy density than nickelcadmium batteries and nickel-hydrogen batteries.

A typical example of electrolytic solutions for use in lithium-ion secondary batteries is an nonaqueous electrolytic solution in which an electrolyte, e.g., LiPF₆, LiBF₄, LiN (CF₃SO₂)₂, or LiCF₃ (CF₂)₃SO₃ is dissolved in a mixed solvent of a high-dielectric solvent, e.g., ethylene carbonate, propylene carbonate, or γ-butyrolactone, and a low-viscosity solvent, e.g., dimethyl carbonate, diethyl carbonate, or ethylmethyl carbonate.

Carbon materials capable of storing and releasing lithium ions have been used as negative-electrode active materials for use in lithium-ion secondary batteries. Examples thereof include natural graphite, artificial graphite, and amorphous graphite. However, these carbon materials have already been used at a level close to a theoretical capacity. To produce lithium-ion secondary batteries having higher capacities, negative-electrode active materials in place of carbon materials have been required.

In recent years, negative-electrode active materials composed of elemental metals, such as silicon (Si), tin (Sn), and lead (Pb), capable of being alloyed with lithium, alloys containing at least these metal elements, and metal compounds containing these metal elements (hereinafter, referred to as "negative-electrode active materials containing Si, Sn, Pb, and the like") have been reported. These materials have larger capacities per unit volumes and unit weight than those of carbon materials described above. Thus, the use of these materials should be useful to produce lithium-ion secondary batteries having higher capacities.

Secondary batteries including the negative-electrode active materials containing Si, Sn, Pb, and the like have higher capacities but have problems of a large reduction in capacity for long-term use due to large expansion and contraction (volume change) of the active materials during charging and discharging, a reduction in the particle size of active materials, the detachment of the active materials from current collectors, and a reaction of an electrolytic solution on a newly formed surface (surface exposed by detachment).

It is reported that with respect to a nonaqueous electrolytic solution for use in secondary batteries including negative-electrode active materials containing Si, Sn, Pb, and the like, in order to improve charge-discharge cycle characteristics of a battery, a method for improving charge-discharge cycle characteristics of a battery includes adding a heterocyclic compound containing a sulfur atom and/or an oxygen atom in its ring to a nonaqueous electrolytic solution to form a film on a surface of a negative-electrode active material (see Patent Document 1).

It is also reported that the incorporation of an isocyanate compound into a nonaqueous electrolytic solution improves cycle characteristics and high-temperature storage characteristics (see Patent Documents 2 and 3).

Patent Document 4 discloses nonaqueous electrolyte solutions comprising a lithium salt, a cyclic carbonate, a linear carbonate and an isocyanate-based additive.

Patent Document 5 relates to a non-aqueous electrolyte solution comprising a fluorine-containing conducting salt, optionally an organic solvent for the conducting salt and an organic isocyanate.

Patent Document 6 relates to a rechargeable battery with a non-aqueous electrolyte containing (i) at least one of a linear carbonate and a saturated cyclic carbonate, (ii) a silicon-containing sulfite or sulfate ester, and (iii) an isocyanate compound.

Patent Document 7 describes processes for the preparation of N-aryl-S,S-dihydrocarbylsulfilimines by reaction of phenylisocyanate compounds with hydrocarbyl sulfoxides. In the reaction, sulfuric acid is used as an acid catalyst.

Non-Patent Document 1 relates to the use of aromatic isocyanates as a new type of electrolyte additive for the improved performance of Li-ion batteries.
[Patent Document 1] Japanese Unexamined Patent Application Publication No. 2004-87284
[Patent Document 2] Japanese Unexamined Patent Application Publication No. 2002-8719
[Patent Document 3] Japanese Unexamined Patent Application Publication No. 2006-164759
[Patent Document 4] US 6 905 762 B1
[Patent Document 5] DE 100 42 149 A1
[Patent Document 6] WO 2006/137224 A1 (English-language patent family member US 2012/045698 A1)
[Patent Document 7] US 4 578 514 A
[Non-Patent Document 1] Zhang et al., Journal of Power Sources, 163 (1) (2006) 567 - 573

In these documents, however, no specific example of a secondary battery including the negative-electrode active materials containing Si, Sn, Pb, and the like is given. Thus, particularly-problematic cycle characteristics of secondary batteries including the negative-electrode active materials containing Si, Sn, Pb, and the like cannot be improved. Furthermore, these documents are silent on the fact that the nonaqueous electrolytic solution containing the isocyanate compound is more effective in improving battery characteristics of the secondary batteries including the negative-electrode active materials containing Si, Sn, Pb, and the like than those of secondary batteries using carbon-based negative electrodes.

The present invention has been made in light of the circumstances described above. It is an object of the present invention to provide a nonaqueous electrolytic solution for use in a nonaqueous electrolyte secondary battery including a negative electrode having a negative-electrode active material containing at least one atom selected from the group consisting of Si, Sn, and Pb, in which the nonaqueous electrolytic solution imparts satisfactory cycle characteristics to the battery. It is another object of the present invention to provide a secondary battery including the nonaqueous electrolytic solution.

### SUMMARY OF THE INVENTION

According to the present invention, a nonaqueous electrolytic solution for use in a lithium ion secondary battery including a positive electrode having a positive-electrode active material capable of storing and releasing lithium ions and a negative electrode having a negative-electrode active material containing at least one atom selected from the group consisting of Si, Sn, and Pb, includes an electrolyte, a nonaqueous solvent, and an isocyanate compound having at least one aromatic ring in its molecule, wherein the nonaqueous electrolytic solution comprises a lithium salt as an electrolyte.

According to the present invention, a nonaqueous electrolytic solution for use in a nonaqueous electrolyte secondary battery including a positive electrode having a positive-electrode active material capable of storing and releasing metal ions and a negative electrode having a negative-electrode active material containing at least one atom selected from the group consisting of Si, Sn, and Pb, includes an electrolyte, a nonaqueous solvent, and an isocyanate compound having at least one aromatic ring in its molecule, in which the isocyanate compound has an isocyanato group directly bonded to the aromatic ring.

A nonaqueous electrolyte secondary battery including a positive electrode having a positive-electrode active material capable of storing and releasing metal ions and a negative electrode having a negative-electrode active material containing at least one atom selected from the group consisting of Si, Sn, and Pb, includes the above-described nonaqueous electrolytic solution according to the present invention.

According to the present invention, the secondary battery including the negative-electrode active material containing at least one atom selected from the group consisting of Si, Sn, and Pb has excellent cycle characteristics, the negative-electrode active material being effective in achieving an increase in capacity.

A detailed mechanism for the excellent effect of the present invention is not clear but is speculated follows.

In the case of using a negative electrode having a negative-electrode active material containing at least one atom selected from the group consisting of Si, Sn, and Pb, a large change in the volume of the negative electrode causes a significant reduction in capacity for long-term use (cycle), as described below.

In the case where the nonaqueous electrolytic solution contains the isocyanate compound having at least one aromatic ring in its molecule, the isocyanate compound forms a satisfactory protective film on a surface of the negative electrode, thereby inhibiting a reaction between the electrolytic solution and the negative electrode. In this case, when a carbon-based material is used, the battery characteristics can be deteriorated because of the formation of a high-resistance film. Advantageously, the use of the negative electrode having the negative-electrode active material containing at least one atom selected from the group consisting of Si, Sn, and Pb eliminates the foregoing problem.

Furthermore, in the case where the electrolytic solution contains one or more compounds selected from a monofluorophosphate, a difluorophosphate, and a carbonate that contains an unsaturated bond and/or a halogen atom together with the isocyanate compound having at least one aromatic ring in its molecule, a synergistic effect from these compounds and the isocyanate compound results in the formation of a further satisfactory protective film, thereby achieving particularly excellent cycle characteristics.

### DETAILED DESCRIPTION OF THE INVENTION

While a mode for carrying out the invention will be described in detail below, the following description is merely an embodiment (representative embodiment) of the present invention. The present invention is not limited thereto so long as the invention does not depart from the subject matter in the claims.

### [1. Nonaqueous Electrolytic Solution]

A nonaqueous electrolytic solution of the present invention is a nonaqueous electrolytic solution for use in a nonaqueous electrolyte secondary battery including a nonaqueous electrolytic solution, a negative electrode, and a positive electrode, the negative electrode and the positive electrode being capable of storing and releasing lithium ions, and the negative electrode having a negative-electrode active material containing at least one atom selected from the group consisting of a Si atom, a Sn atom, and a Pb atom.

The nonaqueous electrolytic solution of the present invention usually contains an electrolyte and a nonaqueous solvent as main components, like a common nonaqueous electrolytic solution. The nonaqueous electrolytic solution of the present invention further contains an isocyanate compound (hereinafter, also referred to as an "aromatic isocyanate compound") having at least one aromatic ring. Preferably, the nonaqueous electrolytic solution of the present invention still further contains one or more compounds selected from a monofluorophosphate, a difluorophosphate, and a carbonate that contains an unsaturated bond and/or a halogen atom.

### [1-1. Isocyanate Compound Having At Least One Aromatic Ring in Its Molecule]

The aromatic isocyanate compound (an isocyanate compound having at least one aromatic ring in its molecule) according to the present invention is at least one selected from limited. Any aromatic isocyanate compound may be used so long as it is included in the definition. To form a satisfactory protective film, a compound having an isocyanato group that is directly bonded to an aromatic ring is preferred. Furthermore, a compound having an electron-withdrawing group, for example, a halogen atom, a halogenated alkyl group, an acyl group, or a nitro group, in its molecule is preferred. In particular, a compound having a halogen atom in its molecule is preferred. In this case, a compound having a fluorine atom as a halogen atom is preferred.

Examples of an aromatic isocyanate compound not part of the current invention and having an isocyanato group that is not directly bonded to an aromatic ring are as follows:
benzyl isocyanate,
phenethyl isocyanate,
1-phenylethyl isocyanate,
1-phenylpropyl isocyanate,
2-phenylpropyl isocyanate,
3-phenylpropyl isocyanate,
2-fluorobenzyl isocyanate,
3-fluorobenzyl isocyanate,
4-fluorobenzyl isocyanate,
4-chlorobenzyl isocyanate,
4-bromobenzyl isocyanate,
4-iodobenzyl isocyanate,
2,3-difluorobenzyl isocyanate,
2,4-difluorobenzyl isocyanate,
2,5-difluorobenzyl isocyanate,
2,6-difluorobenzyl isocyanate,
2,3,4-trifluorobenzyl isocyanate,
2,3,5-trifluorobenzyl isocyanate,
2,3,6-trifluorobenzyl isocyanate,
2,4,5-trifluorobenzyl isocyanate,
2,4,6-trifluorobenzyl isocyanate,
2,3,4,5,6-pentafluorobenzyl isocyanate,
4-trifluoromethylbenzyl isocyanate,
4-(3,3,3-trifluoroethyl)benzyl isocyanate, and
benzoyl isocyanate.

Examples of the aromatic isocyanate compound not part of the current invention and having an isocyanato group that is directly bonded to an aromatic ring are as follows:
phenyl isocyanate,
2-naphthyl isocyanate,
3-naphthyl isocyanate,
2-pyridyl isocyanate,
3-pyridyl isocyanate,
4-pyridyl isocyanate,
2-furyl isocyanate,
3-furyl isocyanate,
2-thienyl isocyanate,
3-thienyl isocyanate,
1,2-phenylene diisocyanate,
1,3-phenylene diisocyanate,
1,4-phenylene diisocyanate,
2-methylphenyl isocyanate,
3-methylphenyl isocyanate,
4-methylphenyl isocyanate,
2-ethylphenyl isocyanate,
3-ethylphenyl isocyanate,
4-ethylphenyl isocyanate,
2-acetylphenyl isocyanate,
3-acetylphenyl isocyanate,
4-acetylphenyl isocyanate,
2-nitrophenyl isocyanate,
3-nitrophenyl isocyanate, and
4-nitrophenyl isocyanate.

The compound having a halogen atom in its molecule may be a compound having one halogen atom and preferably 1 to 5 halogen atoms. Examples thereof are described below. The following examples are preferred also because isocyanato groups are directly bonded to aromatic rings. Examples of isocyanate compounds not part of the current invention include
2-fluorophenyl isocyanate,
3-fluorophenyl isocyanate,
4-fluorophenyl isocyanate,
2-chlorophenyl isocyanate,
3-chlorophenyl isocyanate,
4-chlorophenyl isocyanate,
2-bromophenyl isocyanate,
3-bromophenyl isocyanate,
4-bromophenyl isocyanate,
2-iodophenyl isocyanate,
3-iodophenyl isocyanate,
4-iodophenyl isocyanate,
2,3-difluorophenyl isocyanate,
2,4-difluorophenyl isocyanate,
3,4-difluorophenyl isocyanate,
2,5-difluorophenyl isocyanate,
2,6-difluorophenyl isocyanate,
3,5-difluorophenyl isocyanate,
2,3,4-trifluorophenyl isocyanate,
2,3,5-trifluorophenyl isocyanate,
2,3,6-trifluorophenyl isocyanate,
2,4,5-trifluorophenyl isocyanate,
2,4,6-trifluorophenyl isocyanate,
2,3,4,5,6-pentafluorophenyl isocyanate,

Among these, a compound having a fluorine atom in its molecule is preferred. Further examples of isocyanate compounds not part of the current invention include
2-fluorophenyl isocyanate,
3-fluorophenyl isocyanate,
4-fluorophenyl isocyanate,
2,3-difluorophenyl isocyanate,
2,4-difluorophenyl isocyanate,
3,4-difluorophenyl isocyanate,
2,5-difluorophenyl isocyanate,
2,6-difluorophenyl isocyanate,
3,5-difluorophenyl isocyanate,
2,3,4-trifluorophenyl isocyanate,
2,3,5-trifluorophenyl isocyanate,
2,3,6-trifluorophenyl isocyanate,
2,4,5-trifluorophenyl isocyanate,
2,4,6-trifluorophenyl isocyanate,
2,3,4,5,6-pentafluorophenyl isocyanate,

Examples of isocyanate compounds of the current invention include
2-trifluoromethylphenyl isocyanate,
3-trifluoromethylphenyl isocyanate,
4-trifluoromethylphenyl isocyanate,
2-(2,2,2-trifluoroethyl)phenyl isocyanate,
3-(2,2,2-trifluoroethyl)phenyl isocyanate, and
4-(2,2,2-trifluoroethyl)phenyl isocyanate.

A method for producing such an aromatic isocyanate compound is not particularly limited. Any of known methods can be selected to produce it.

The aromatic isocyanate compounds may be contained in the nonaqueous electrolytic solution of the present invention, either alone or in any combination of two or more in any proportion.

The proportion of the aromatic isocyanate compound in the nonaqueous electrolytic solution of the present invention is not particularly limited. Any proportion may be used so long as the advantage of the present invention is not significantly impaired. The nonaqueous electrolytic solution of the present invention desirably has an aromatic isocyanate compound concentration of usually 0.001% by weight or more, preferably 0.01% by weight or more, and more preferably 0.1% by weight or more, and usually 20% by weight or less, preferably 10% by weight or less, and more preferably 5% by weight or less. At a concentration of less than the lower limit of this range, in the case where the nonaqueous electrolytic solution of the present invention is used in a nonaqueous electrolyte secondary battery, the nonaqueous electrolyte secondary battery does not have sufficiently improved characteristics, in some cases. In contrast, a concentration exceeding the upper limit of this range can increase reactivity in the nonaqueous electrolytic solution, which can reduce the battery characteristics of the nonaqueous electrolyte secondary battery.

### [1-2. Carbonate Having Unsaturated Bond and/or Halogen Atom]

A carbonate having an unsaturated bond and/or a halogen atom according to the present invention (hereinafter, appropriately referred to as a "specific carbonate") may have an unsaturated bond, a halogen atom, or both of an unsaturated bond and a halogen atom.

With respect to a carbonate having an unsaturated bond (hereinafter, appropriately referred to as an "unsaturated carbonate"), any unsaturated carbonate can be used without limitation so long as the carbonate has a carbon-carbon unsaturated bond, for example, a carbon-carbon double bond or a carbon-carbon triple bond. Note that the carbonate having an unsaturated bond also includes a carbonate having an aromatic ring.

Examples of the unsaturated carbonate include vinylene carbonate derivatives, ethylene carbonate derivatives substituted with substituents having aromatic rings or carbon-carbon unsaturated bonds, phenyl carbonates, vinyl carbonates, and allyl carbonates.

Specific examples of vinylene carbonate derivatives include
vinylene carbonate,
methylvinylene carbonate,
4,5-dimethylvinylene carbonate,
phenylvinylene carbonate,
4,5-diphenylvinylene carbonate, and
catechol carbonate.

Specific examples of ethylene carbonate derivatives substituted with substituents having aromatic rings or carbon-carbon unsaturated bonds include
vinylethylene carbonate,
4,5-divinylethylene carbonate,
phenylethylene carbonate, and
4,5-diphenylethylene carbonate.

Specific examples of phenyl carbonates include diphenyl carbonate,
ethylphenyl carbonate,
methylphenyl carbonate, and
t-butylphenyl carbonate.

Specific examples of vinyl carbonates include divinyl carbonate, and
methylvinyl carbonate.

Specific examples of allyl carbonates include diallyl carbonate, and
allylmethyl carbonate.

Among these unsaturated carbonates, vinylene carbonate derivatives and ethylene carbonate derivatives substituted with substituents having aromatic rings or carbon-carbon unsaturated bonds are preferred. In particular, vinylene carbonate, 4,5-diphenylvinylene carbonate, 4,5-dimethylvinylene carbonate, and vinylethylene carbonate are more preferably used because they form stable interface-protecting films.

With respect to a carbonate having a halogen atom (hereinafter, appropriately referred to as a "halogenated carbonate"), any halogenated carbonate can be used without limitation so long as the carbonate has a halogen atom.

Specific examples of the halogen atom contained in the halogenated carbonate include a fluorine atom, a chlorine atom, a bromine atom, and an iodine atom. Among these, a fluorine atom or a chlorine atom is preferred. A fluorine atom is particularly preferred. The number of halogen atoms contained in the halogenated carbonate is not particularly limited so long as it is one or more. The number of halogen atoms contained in the halogenated carbonate is usually 6 or less and preferably 4 or less. In the case where the halogenated carbonate has a plurality of halogen atoms, they may be the same or different.

Examples of the halogenated carbonate include ethylene carbonate derivatives, dimethyl carbonate derivatives, ethylmethyl carbonate derivatives, and diethyl carbonate derivatives.

Specific examples of the ethylene carbonate derivatives include
fluoroethylene carbonate,
chloroethylene carbonate,
4,4-difluoroethylene carbonate,
4,5-difluoroethylene carbonate,
4,4-dichloroethylene carbonate,
4,5-dichloroethylene carbonate,
4-fluoro-4-methylethylene carbonate,
4-chloro-4-methylethylene carbonate,
4,5-difluoro-4-methylethylene carbonate,
4,5-dichloro-4-methylethylene carbonate,
4-fluoro-5-methylethylene carbonate,
4-chloro-5-methylethylene carbonate,
4,4-difluoro-5-methylethylene carbonate,
4,4-dichloro-5-methylethylene carbonate,
4-(fluoromethyl)-ethylene carbonate,
4-(chloromethyl)-ethylene carbonate,
4-(difluoromethyl)-ethylene carbonate,
4-(dichloromethyl)-ethylene carbonate,
4-(trifluoromethyl)-ethylene carbonate,
4-(trichloromethyl)-ethylene carbonate,
4-(fluoromethyl)-4-fluoroethylene carbonate,
4-(chloromethyl)-4-chloroethylene carbonate,
4-(fluoromethyl)-5-fluoroethylene carbonate,
4-(chloromethyl)-5-chloroethylene carbonate,
4-fluoro-4,5-dimethylethylene carbonate,
4-chloro-4,5-dimethylethylene carbonate,
4,5-difluoro-4,5-dimethylethylene carbonate,
4,5-dichloro-4,5-dimethylethylene carbonate,
4,4-difluoro-5,5-dimethylethylene carbonate, and
4,4-dichloro-5,5-dimethylethylene carbonate.

Specific examples of the dimethyl carbonate derivatives include
fluoromethylmethyl carbonate,
difluoromethylmethyl carbonate,
trifluoromethylmethyl carbonate,
bis(fluoromethyl) carbonate,
bis(difluoro)methyl carbonate,
bis(trifluoro)methyl carbonate,
chloromethylmethyl carbonate,
dichloromethylmethyl carbonate,
trichloromethylmethyl carbonate,
bis(chloromethyl) carbonate,
bis(dichloro)methyl carbonate, and
bis(trichloro)methyl carbonate.

Specific examples of the ethylmethyl carbonate derivatives include
2-fluoroethylmethyl carbonate,
ethylfluoromethyl carbonate,
2,2-difluoroethylmethyl carbonate,
2-fluoroethylfluoromethyl carbonate,
ethyldifluoromethyl carbonate,
2,2,2-trifluoroethylmethyl carbonate,
2,2-difluoroethylfluoromethyl carbonate,
2-fluoroethyldifluoromethyl carbonate,
ethyltrifluoromethyl carbonate,
2-chloroethylmethyl carbonate,
ethylchloromethyl carbonate,
2,2-dichloroethylmethyl carbonate,
2-chloroethylchloromethyl carbonate,
ethyldichloromethyl carbonate,
2,2,2-trichloroethylmethyl carbonate,
2,2-dichloroethylchloromethyl carbonate,
2-chloroethyldichloromethyl carbonate, and
ethyltrichloromethyl carbonate.

Specific examples of the diethyl carbonate derivatives include
ethyl-(2-fluoroethyl) carbonate,
ethyl-(2,2-difluoroethyl) carbonate,
bis(2-fluoroethyl) carbonate,
ethyl-(2,2,2-trifluoroethyl) carbonate,
2,2-difluoroethyl-2'-fluoroethyl carbonate,
bis(2,2-difluoroethyl) carbonate,
2,2,2-trifluoroethyl-2'-fluoroethyl carbonate,
2,2,2-trifluoroethyl-2',2'-difluoroethyl carbonate,
bis(2,2,2-trifluoroethyl) carbonate,
ethyl-(2-chloroethyl) carbonate,
ethyl-(2,2-dichloroethyl) carbonate,
bis(2-chloroethyl) carbonate,
ethyl-(2,2,2-trichloroethyl) carbonate,
2,2-dichloroethyl-2'-chloroethyl carbonate,
bis(2,2-dichloroethyl) carbonate,
2,2,2-trichloroethyl-2'-chloroethyl carbonate,
2,2,2-trichloroethyl-2',2'-dichloroethyl carbonate, and
bis(2,2,2-trichloroethyl) carbonate.

Among these halogenated carbonates, a carbonate having a fluorine atom is preferred. An ethylene carbonate derivative having a fluorine atom is more preferred. In particular, fluoroethylene carbonate, 4-(fluoromethyl)-ethylene carbonate, 4,4-difluoroethylene carbonate, 4,5-difluoroethylene carbonate are more preferably used because they form interface-protecting films.

With respect to a carbonate having an unsaturated bond and a halogen atom (hereinafter, appropriately referred to as a "halogenated unsaturated carbonate"), any halogenated unsaturated carbonate may be used without limitation so long as the advantage of the present invention is not significantly impaired.

Examples of the halogenated unsaturated carbonate include vinylene carbonate derivatives, ethylene carbonate derivatives substituted with substituents having aromatic rings or carbon-carbon unsaturated bonds, and allyl carbonates.

Specific examples of the vinylene carbonate derivatives include
fluorovinylene carbonate,
4-fluoro-5-methylvinylene carbonate,
4-fluoro-5-phenylvinylene carbonate,
chlorovinylene carbonate,
4-chloro-5-methylvinylene carbonate, and
4-chloro-5-phenylvinylene carbonate.

Specific examples of the ethylene carbonate derivatives substituted with substituents having aromatic rings or carbon-carbon unsaturated bonds include
4-fluoro-4-vinylethylene carbonate,
4-fluoro-5-vinylethylene carbonate,
4,4-difluoro-5-vinylethylene carbonate,
4,5-difluoro-4-vinylethylene carbonate,
4-chloro-5-vinylethylene carbonate,
4,4-dichloro-5-vinylethylene carbonate
4,5-dichloro-4-vinylethylene carbonate,
4-fluoro-4,5-divinylethylene carbonate,
4,5-difluoro-4,5-divinylethylene carbonate,
4-chloro-4,5-divinylethylene carbonate,
4,5-dichloro-4,5-divinylethylene carbonate,
4-fluoro-4-phenylethylene carbonate,
4-fluoro-5-phenylethylene carbonate
4,4-difluoro-5-phenylethylene carbonate,
4,5-difluoro-4-phenylethylene carbonate,
4-chloro-4-phenylethylene carbonate,
4-chloro-5-phenylethylene carbonate,
4,4-dichloro-5-phenylethylene carbonate,
4,5-dichloro-4-phenylethylene carbonate,
4,5-difluoro-4,5-diphenylethylene carbonate, and
4,5-dichloro-4,5-diphenylethylene carbonate.

Specific examples of phenyl carbonates include fluoromethylphenyl carbonate,
2-fluoroethylphenyl carbonate,
2,2-difluoroethylphenyl carbonate,
2,2,2-trifluoroethylphenyl carbonate,
chloromethylphenyl carbonate,
2-chloroethylphenyl carbonate,
2,2-dichloroethylphenyl carbonate, and
2,2,2-trichloroethylphenyl carbonate.

Specific examples of vinyl carbonates include
fluoromethylvinyl carbonate,
2-fluoroethylvinyl carbonate,
2,2-difluoroethylvinyl carbonate,
2,2,2-trifluoroethylvinyl carbonate,
chloromethylvinyl carbonate,
2-chloroethylvinyl carbonate,
2,2-dichloroethylvinyl carbonate, and
2,2,2-trichloroethylvinyl carbonate.

Specific examples of allyl carbonates include
fluoromethylallyl carbonate,
2-fluoroethylallyl carbonate,
2,2-difluoroethylallyl carbonate,
2,2,2-trifluoroethylallyl carbonate,
chloromethylallyl carbonate,
2-chloroethylallyl carbonate,
2,2-dichloroethylallyl carbonate, and
2,2,2-trichloroethylallyl carbonate.

Among the foregoing specific examples of carbonates described above, it is particularly preferred to use one or more compounds selected from the group consisting of vinylene carbonate, vinylethylene carbonate, fluoroethylene carbonate, and difluoroethylene carbonates, such as 4,5-difluoroethylene carbonate, and derivatives thereof, which are highly effective when used alone.

Each of the foregoing specific carbonates may have any molecular weight without limitation so long as the advantage of the present invention is not significantly impaired. The molecular weight is usually 50 or more and preferably 80 or more, and usually 250 or less and preferably 150 or less. Excessively high molecular weights can reduce the solubilities of the specific carbonates in a nonaqueous electrolytic solution, which can make it difficult to sufficiently provide the advantage of the present invention.

A method for producing each of the specific carbonates is not particularly limited. Any of known methods can be selected to produce them.

These specific carbonates described above may also be contained in the nonaqueous electrolytic solution of the present invention, either alone or in any combination of two or more in any proportion.

In the case where the specific carbonate is added to the nonaqueous electrolytic solution of the present invention, the amount of the carbonate added is not particularly limited. Any amount of the carbonate may be used so long as the advantage of the present invention is not significantly impaired. The nonaqueous electrolytic solution of the present invention desirably has a carbonate concentration of usually 0.01% by weight or more, preferably 0.1% by weight or more, and more preferably 0.3% by weight or more, and usually 70% by weight or less, preferably 50% by weight or less, more preferably 40% by weight or less, and still more preferably 20% by weight or less. At a concentration of less than the lower limit of this range, in the case where the nonaqueous electrolytic solution of the present invention is used in a nonaqueous electrolyte secondary battery, the nonaqueous electrolyte secondary battery does not have sufficiently improved cycle characteristics, in some cases. When the nonaqueous electrolytic solution of the present invention is used in a nonaqueous electrolyte secondary battery, an excessively high carbonate concentration is liable to cause reductions in the high-temperature storage characteristics and the trickle charge characteristics of the nonaqueous electrolyte secondary battery. In particular, an increase in the amount of gas generated can cause a reduction in discharge capacity retention rate. In the case where the nonaqueous electrolytic solution of the present invention contains fluoroethylene carbonate as the specific carbonate, the nonaqueous electrolytic solution of the present invention usually has a fluoroethylene carbonate concentration of 0.01% by weight to 70% by weight. However, fluoroethylene carbonate can also be used as a nonaqueous solvent as described below. In this case, the proportion of fluoroethylene carbonate in a nonaqueous solvent is preferably in the range of 10% by volume to 50% by volume from the viewpoint of improving the cycle characteristics.

### [1-3. Monofluorophosphate and Difluorophosphate]

Monofluorophosphate and difluorophosphate according to the present invention include salts of monofluorophosphate ions, difluorophosphate ions, and metal ions (hereinafter, also referred to as "metal monofluorophosphate", "metal difluorophosphate", and so forth); and quaternary onium salts of monofluorophosphate ions and difluorophosphate ions (hereinafter, also referred to as "monofluorophosphate quaternary onium salts", "difluorophosphate quaternary onium salts", and so forth).

### <Metal monofluorophosphate and Metal difluorophosphate>

Metals in groups 1, 2, and 13 of the periodic table are exemplified as metals used for metal monofluorophosphate and metal difluorophosphate according to the present invention.

Specific examples of metals in group 1 of the periodic table include lithium, sodium, potassium, and cesium. Among these metals, lithium and sodium are preferred from the viewpoint of the ease of availability and the battery characteristics to be provided. Lithium is particularly preferred.

Specific examples of the metals in group 2 of the periodic table include magnesium, calcium, strontium, and barium. Among these metals, magnesium and calcium are preferred from the viewpoint of the ease of availability and the battery characteristics to be provided. Magnesium is particularly preferred.

Specific examples of the metals in group 13 of the periodic table include aluminum, gallium, indium, and thallium. Among these metals, aluminum and gallium are preferred from the viewpoint of the ease of availability and the battery characteristics to be provided. Aluminum is particularly preferred.

The number of metal atoms in one molecule of each of the metal monofluorophosphate and the metal difluorophosphate according to the present invention is not limited. Only one atom may be contained. Alternatively, two or more atoms may be contained.

In the case where each of the metal monofluorophosphate and the metal difluorophosphate according to the present invention contains two or more metal atoms in one molecule, the types of these metal atoms may be the same or different. Furthermore, one or two or more metal atoms other than those of the metals in groups 1, 2, and 13 of the periodic table may be contained.

Specific examples of the metal monofluorophosphate and the metal difluorophosphate include
Li₂PO₃F,
Na₂PO₃F,
MgPO₃F,
CaPO₃F,
Al₂ (PO₃F)₂,
Ga₂ (PO₃F)₃,
LiPO₂F₂,
NaPO₂F₂,
Mg (PO₂F₂)₂,
Ca (PO₂F₂)₂,
Al (PO₂F₂)₃, and
Ga(PO₂F₂)₃.
Among these, Li₂PO₃F, LiPO₂F₂, NaPO₂F₂, and Mg(PO₂F₂)₂ are preferred from the viewpoint of the ease of availability and the battery characteristics to be provided.

### <Monofluorophosphate Quaternary Onium Salt and Difluorophosphate Quaternary Onium Salt>

Quaternary onium ions used for monofluorophosphate quaternary onium salts and difluorophosphate quaternary onium salts according to the present invention are usually cations. A specific example thereof is a cation represented by general formula (X) described below: 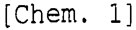 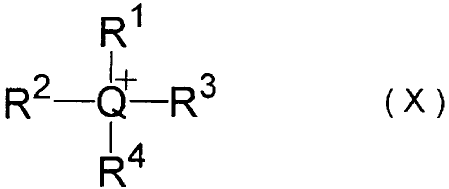 wherein in general formula (X), R¹ to R⁴ each independently represent an optionally substituted hydrocarbon group; and Q represents an atom in group 15 of the periodic table.

In general formula (X), the type of hydrocarbon group represented by each of R¹ to R⁴ is not limited. That is, each of R¹ to R⁴ may be an aliphatic hydrocarbon group, an aromatic hydrocarbon group, and a hydrocarbon group in which both groups are linked. The aliphatic hydrocarbon group may have a chain structure, a cyclic structure, or a structure in which a chain moiety is linked to a cyclic moiety. In the case of a chain structure, the chain hydrocarbon group may have a linear or branched structure. Furthermore, each of R¹ to R⁴ may be a saturated hydrocarbon group or may have an unsaturated bond.

Examples of the hydrocarbon group of each of R¹ to R⁴ include alkyl groups, cycloalkyl groups, aryl groups, and aralkyl groups.

Specific examples of alkyl groups include a methyl group,
an ethyl group,
a 1-propyl group,
a 1-methylethyl group,
a 1-butyl group,
a 1-methylpropyl group,
a 2-methylpropyl group, and
a 1,1-dimethylethyl group.
Among these,
a methyl group,
an ethyl group,
a 1-propyl group, and
a 1-butyl group are preferred.

Specific examples of cycloalkyl groups include
a cyclopentyl group,
a 2-methylcyclopentyl group,
a 3-methylcyclopentyl group,
a 2,2-dimethylcyclopentyl group,
a 2,3-dimethylcyclopentyl group,
a 2,4-dimethylcyclopentyl group,
a 2,5-dimethylcyclopentyl group,
a 3,3-dimethylcyclopentyl group,
a 3,4-dimethylcyclopentyl group,
a 2-ethylcyclopentyl group,
a 3-ethylcyclopentyl group,
a cyclohexyl group,
a 2-methylcyclohexyl group,
a 3-methylcyclohexyl group,
a 4-methylcyclohexyl group,
a 2,2-dimethylcyclohexyl group,
a 2,3-dimethylcyclohexyl group,
a 2,4-dimethylcyclohexyl group,
a 2,5-dimethylcyclohexyl group,
a 2,6-dimethylcyclohexyl group,
a 3,4-dimethylcyclohexyl group,
a 3,5-dimethylcyclohexyl group,
a 2-ethylcyclohexyl group,
a 3-ethylcyclohexyl group,
a 4-ethylcyclohexyl group,
a bicyclo[3.2.1]oct-1-yl group, and
a bicyclo[3.2.1]oct-2-yl group.
Among these,
a cyclopentyl group,
a 2-methylcyclopentyl group,
a 3-methylcyclopentyl group,
a cyclohexyl group,
a 2-methylcyclohexyl group,
a 3-methylcyclohexyl group, and
a 4-methylcyclohexyl group
are preferred.

Specific examples of aryl groups include
a phenyl group,
a 2-methylphenyl group,
a 3-methylphenyl group,
a 4-methylphenyl group, and
a 2,3-dimethylphenyl group.
Among these, a phenyl group is preferred.

Specific examples of aralkyl groups include
a phenylmethyl group,
a 1-phenylethyl group,
a 2-phenylethyl group,
a diphenylmethyl group, and
a triphenylmethyl group.
Among these, a phenylmethyl group and 2-phenylethyl group are preferred.

The hydrocarbon group of each of R¹ to R⁴ may be substituted with one or two or more substituents. The type of substituent is not limited so long as the advantage of the present invention is not significantly impaired. Examples of the substituent include a halogen atom, a hydroxy group, an amino group, a nitro group, a cyano group, a carboxy group, an ether group, and an aldehyde group. In the case where each of R¹ to R⁴ has two or more substituents, these substituents may be the same or different.

When any two or more hydrocarbon groups of R¹ to R⁴ are compared with one another, the hydrocarbon groups may be the same or different. In the case where the hydrocarbon groups of R¹ to R⁴ have substituents, the hydrocarbon groups including the substituents may be the same or different.

Furthermore, any two or more hydrocarbon groups of R¹ to R⁴ or any two or more their substituents may be bonded together to form a cyclic structure.

The number of carbon atoms in the hydrocarbon group of each of R¹ to R⁴ is usually 1 or more, and usually 20 or less, preferably 10 or less, and more preferably 5 or less. An excessively large hydrocarbon group having a large number of carbon atoms results in a reduction in the number of moles per unit weight and is liable to cause the deterioration of various effects. In the case where the hydrocarbon group of each of R¹ to R⁴ has a substituent, the number of carbon atoms in the substituted hydrocarbon group including the substituent needs to satisfy the above range.

In general formula (X), Q represents an atom that belongs to group 15 of the periodic table and preferably represents a nitrogen atom or a phosphorus atom.

Preferred examples of the quaternary onium ion represented by general formula (X) described above include aliphatic chain quaternary salts, aliphatic cyclic ammonium, aliphatic cyclic phosphonium, and nitrogen-containing heteroaromatic cations.

Particularly preferred examples of the aliphatic chain quaternary salts include tetraalkylammonium and tetraalkylphosphonium.

Specific examples of tetraalkylammonium include
tetramethylammonium,
ethyltrimethylammonium,
diethyldimethylammonium,
triethylmethylammonium,
tetraethylammonium, and
tetra-n-butylammonium.

Specific examples of tetraalkylphosphonium include tetramethylphosphonium,
ethyltrimethylphosphonium,
diethyldimethylphosphonium,
triethylmethylphosphonium,
tetraethylphosphonium, and
tetra-n-butylphosphonium.

Particularly preferred examples of aliphatic cyclic ammonium include pyrrolidiniums, morpholiniums, imidazoliniums, tetrahydropyrimidiniums, piperaziniums, and piperidiniums.

Specific examples of pyrrolidiniums include
N,N-dimethylpyrrolidinium,
N-ethyl-N-methylpyrrolidinium, and
N,N-diethylpyrrolidinium.

Specific examples of morpholiniums include
N,N-dimethylmorpholinium,
N-ethyl-N-methylmorpholinium, and
N,N-diethylmorpholinium.

Specific examples of imidazoliniums include
N,N'-dimethylimidazolinium,
N-ethyl-N'-methylimidazolinium,
N,N'-diethylimidazolinium, and
1,2,3-trimethylimidazolinium.

Specific examples of tetrahydropyrimidiniums include
N,N'-dimethyltetrahydropyrimidinium,
N-ethyl-N'-methyltetrahydropyrimidinium,
N,N'-diethyltetrahydropyrimidinium, and
1,2,3-trimethyltetrahydropyrimidinium.

Specific examples of piperaziniums include
N,N,N',N'-tetramethylpiperazinium,
N-ethyl-N,N',N'-trimethylpiperazinium,
N,N-diethyl-N',N'-dimethylpiperazinium,
N,N,N'-triethyl-N'-methylpiperazinium, and
N,N,N',N'-tetraethylpiperazinium.

Specific examples of piperidiniums include
N,N-dimethylpiperidinium,
N-ethyl-N-methylpiperidinium, and
N,N-diethylpiperidinium.

Particularly preferred examples of nitrogen-containing heteroaromatic cations include pyridiniums and imidazoliums.

Specific examples of pyridiniums include
N-methylpyridinium,
N-ethylpyridinium,
1,2-dimethylpyridinium,
1,3-dimethylpyridinium
1,4-dimethylpyridinium, and
1-ethyl-2-methylpyridinium.

Specific examples of imidazoliums include
N,N'-dimethylimidazolium,
N-ethyl-N'-methylimidazolium,
N,N'-diethylimidazolium, and
1,2,3-trimethylimidazolium.

That is, salts of the quaternary onium ions and the monofluorophosphate ions and salts of the quaternary onium ions and the difluorophosphate ions exemplified above are preferred examples of the monofluorophosphate quaternary onium salts and the difluorophosphate quaternary onium salts of the present invention.

In the nonaqueous electrolytic solution of the present invention, a single type of monofluorophosphate or difluorophosphate may be used alone. Alternatively, any two or more types of monofluorophosphate and/or difluorophosphate may be combined in any proportion. A single type of monofluorophosphate or difluorophosphate is usually used from the viewpoint of efficiently operating a secondary battery

The molecular weight of each of monofluorophosphate and difluorophosphate is not limited. Each of monofluorophosphate and difluorophosphate may have any molecular weight so long as the advantage of the present invention is not significantly impaired. Each of monofluorophosphate and difluorophosphate usually has a molecular weight of 100 or more. The upper limit of the molecular weight is not particularly limited. In view of reactivity in a reaction, the upper limit is usually 1000 or less and preferably 500 or less, for practical purposes.

In the present invention, a single type of monofluorophosphate or difluorophosphate is usually used as described above. In the case where a mixture of two or more types of salts is more preferably used in the nonaqueous electrolytic solution, two or more types of monofluorophosphates and/or difluorophosphates may be used in combination as a mixture.

A method for producing each of the monofluorophosphate and the difluorophosphate is not particularly limited. Any of known methods can be selected to produce them.

In the case where the nonaqueous electrolytic solution of the present invention contains the monofluorophosphate and/or the difluorophosphate, the total proportion of the monofluorophosphate and/or the difluorophosphate is preferably 10 ppm or more (0.001% by weight or more), more preferably 0.01% by weight or more, still more preferably 0.05% by weight or more, and particularly preferably 0.1% by weight or more with respect to the total amount of the nonaqueous electrolytic solution. The upper limit of the total proportion is preferably 5% by weight or less, more preferably 4% by weight or less, and still more preferably 3% by weight or less. An excessively low proportion of the monofluorophosphate and/or the difluorophosphate in the nonaqueous electrolytic solution can lead to difficulty in improving discharge load characteristics. An excessively high concentration can lead to a reduction in charge-discharge efficiency.

When a secondary battery including a nonaqueous electrolytic solution containing the monofluorophosphate and the difluorophosphate is practically produced and then disassembled to take out the nonaqueous electrolytic solution, the proportions of the monofluorophosphate and the difluorophosphate in the resulting nonaqueous electrolytic solution are often significantly reduced. In the case where at least one type of monofluorophosphate and/or difluorophosphate can be detected, the nonaqueous electrolytic solution is assumed to have contained the monofluorophosphate and/or the difluorophosphate.

Furthermore, even in the case where a nonaqueous electrolytic solution obtained by practically producing a secondary battery including the nonaqueous electrolytic solution containing the monofluorophosphate and the difluorophosphate and then disassembling the battery to take out the nonaqueous electrolytic solution does not contain the monofluorophosphate or the difluorophosphate, the monofluorophosphate or the difluorophosphate is often detected on a positive electrode, a negative electrode, or a separator, which are other components of the nonaqueous electrolyte secondary battery. Thus, also in the case where at least one type of monofluorophosphate and/or difluorophosphate can be detected on at least one component selected from the positive electrode, the negative electrode, and the separator, the nonaqueous electrolytic solution is assumed to have contained the monofluorophosphate and/or the difluorophosphate. The same is true for the case where the monofluorophosphate and/or the difluorophosphate is contained in a nonaqueous electrolytic solution and at least one component selected from a positive electrode, a negative electrode, and a separator.

The foregoing effects can also be provided by incorporating, in advance, the monofluorophosphate and/or the difluorophosphate into a positive electrode or onto a surface of a positive electrode of a nonaqueous electrolyte secondary battery to be produced. In this case, the incorporated monofluorophosphate and/or difluorophosphate should be partially or completely dissolved in a nonaqueous electrolytic solution to provide the function. A means for incorporating the monofluorophosphate and/or the difluorophosphate in advance into the positive electrode or on the surface of the positive electrode is not particularly limited. Specific examples thereof include a method in which the monofluorophosphate and/or the difluorophosphate is dissolved in a slurry prepared for the formation of a positive electrode described below; and a method in which an already formed positive electrode is subjected to application of or impregnation with a solution of the monofluorophosphate and/or the difluorophosphate dissolved in any nonaqueous solvent, followed by drying to remove the solvent.

The monofluorophosphate and/or the difluorophosphate may be incorporated into a positive electrode or onto a surface of a positive electrode from a nonaqueous electrolytic solution containing at least one type of monofluorophosphate and/or difluorophosphate when a nonaqueous electrolyte secondary battery is practically produced. In the case where a nonaqueous electrolyte secondary battery is produced, a positive electrode is impregnated with a nonaqueous electrolytic solution; hence, the monofluorophosphate and the difluorophosphate are often incorporated into the positive electrode monofluorophosphate or onto a surface of the positive electrode. When at least monofluorophosphate and/or difluorophosphate can be detected from a positive electrode recovered in disassembling a battery, a nonaqueous electrolytic solution is assumed to have contained the monofluorophosphate and/or the difluorophosphate.

The foregoing effects can also be provided by incorporating, in advance, the monofluorophosphate and/or the difluorophosphate into a negative electrode or onto a surface of a negative electrode of a nonaqueous electrolyte secondary battery to be produced. In this case, the incorporated monofluorophosphate and/or difluorophosphate should be partially or completely dissolved in a nonaqueous electrolytic solution to provide the function. A means for incorporating the monofluorophosphate and/or the difluorophosphate in advance into the negative electrode or onto the surface of the negative electrode is not particularly limited. Specific examples thereof include a method in which the monofluorophosphate and/or the difluorophosphate is dissolved in a slurry prepared for the formation of a negative electrode described below; and a method in which an already formed negative electrode is subjected to application of or impregnation with a solution of the monofluorophosphate and/or the difluorophosphate dissolved in any nonaqueous solvent, followed by drying to remove the solvent.

The monofluorophosphate and/or the difluorophosphate may be incorporated into a negative electrode or onto a surface of a negative electrode from a nonaqueous electrolytic solution containing at least one type of monofluorophosphate and/or difluorophosphate when a nonaqueous electrolyte secondary battery is practically produced. In the case where a secondary battery is produced, a negative electrode is impregnated with a nonaqueous electrolytic solution; hence, when a nonaqueous electrolytic solution containing the monofluorophosphate and/or the difluorophosphate is used, the monofluorophosphate and/or the difluorophosphate in the nonaqueous electrolytic solution is often incorporated into the negative electrode or onto a surface of the negative electrode. When at least monofluorophosphate and/or difluorophosphate can be detected from a negative electrode recovered in disassembling a battery, a nonaqueous electrolytic solution is assumed to have contained the monofluorophosphate and/or the difluorophosphate.

The foregoing effects can also be provided by incorporating, in advance, the monofluorophosphate and/or the difluorophosphate into a separator or onto a surface of a separator of a nonaqueous electrolyte secondary battery to be produced. In this case, the incorporated monofluorophosphate and/or difluorophosphate should be partially or completely dissolved in a nonaqueous electrolytic solution to provide the function. A means for incorporating the monofluorophosphate and/or the difluorophosphate in advance into the separator or onto the surface of the separator is not particularly limited. Specific examples thereof include a method in which the monofluorophosphate and/or the difluorophosphate is mixed when a separator is formed; and a method in which before the formation of a nonaqueous electrolyte secondary battery, a separator is subjected to application of or impregnation with a solution of the monofluorophosphate and/or the difluorophosphate dissolved in any nonaqueous solvent, followed by drying to remove the solvent.

The monofluorophosphate and/or the difluorophosphate may be incorporated into a separator or onto a surface of a separator from a nonaqueous electrolytic solution containing at least one type of monofluorophosphate and/or difluorophosphate when a nonaqueous electrolyte secondary battery is practically produced. In the case where a secondary battery is produced, a separator is impregnated with a nonaqueous electrolytic solution; hence, when a nonaqueous electrolytic solution containing the monofluorophosphate and/or the difluorophosphate is used, the monofluorophosphate and/or the difluorophosphate in the nonaqueous electrolytic solution is often incorporated into the separator or onto a surface of the separator. When at least monofluorophosphate and/or difluorophosphate can be detected from a separator recovered in disassembling a battery, a nonaqueous electrolytic solution is assumed to have contained the monofluorophosphate and/or the difluorophosphate.

### [1-4. Nonaqueous Solvent]

With respect to a nonaqueous solvent contained in the nonaqueous electrolytic solution of the present invention, any nonaqueous solvent may be used so long as the advantage of the present invention is significantly impaired. The nonaqueous solvent may be used alone. Alternatively, two or more nonaqueous solvents may be combined in any proportion.

Examples of the nonaqueous solvent usually used include
cyclic carbonates,
chain carbonates,
chain and cyclic carboxylates,
chain and cyclic ethers,
phosphorus-containing organic solvents, and
sulfur-containing organic solvents.

The type of cyclic carbonate is not particularly limited. Examples of cyclic carbonate usually used include
ethylene carbonate,
propylene carbonate, and
butylene carbonate.
Furthermore, fluoroethylene carbonate that can be added as the "specific carbonate" described above may be used as the nonaqueous solvent.

Among these, ethylene carbonate and propylene carbonate are preferred because an electrolyte is readily dissolved owing to their high dielectric constants and because when a nonaqueous electrolyte secondary battery is produced, the battery has good cycle characteristics.

The type of chain carbonate is not particularly limited. Examples of chain carbonate usually used include
dimethyl carbonate,
ethylmethyl carbonate,
diethyl carbonate,
methyl-n-propyl carbonate,
ethyl-n-propyl carbonate, and
di-n-propyl carbonate.

The type of chain carboxylate is not particularly limited. Examples of chain carboxylate usually used include
methyl acetate,
ethyl acetate,
n-propyl acetate,
i-propyl acetate,
n-butyl acetate,
i-butyl acetate,
t-butyl acetate,
methyl propionate,
ethyl propionate,
n-propyl propionate,
i-propyl propionate,
n-butyl propionate,
i-butyl propionate, and
t-butyl propionate.
Among these, ethyl acetate, methyl propionate, and ethyl propionate are more preferred.

The type of cyclic carboxylate is not particularly limited. Examples of cyclic carboxylate usually used include
γ-butyrolactone,
γ-valerolactone, and
δ-valerolactone.
Among these, γ-butyrolactone is more preferred.

The type of chain ether is not particularly limited. Examples of chain ether usually used include
dimethoxymethane,
dimethoxyethane,
diethoxymethane,
diethoxyethane,
ethoxymethoxymethane, and
ethoxymethoxyethane.
Among these, dimethoxyethane and diethoxyethane are more preferred.

The type of cyclic ether is not particularly limited. Examples of cyclic ether usually used include
tetrahydrofuran and
2-methyltetrahydrofuran.

The type of phosphorus-containing organic solvent is not particularly limited. Examples of the phosphorus-containing organic solvent include
phosphates, such as trimethyl phosphate,
triethyl phosphate, and
triphenyl phosphate;
phosphites, such as trimethyl phosphite,
triethyl phosphite, and
triphenyl phosphite; and
phosphine oxides, such as trimethylphosphine oxide,
triethylphosphine oxide, and
triphenylphosphine oxide.

The type of sulfur-containing organic solvent is not particularly limited. Examples of the sulfur-containing organic solvent include
ethylene sulfite,
1,3-propane sultone,
1,4-butane sultone,
methyl methanesulfonate,
busulfan,
sulfolane,
sulfolene,
dimethyl sulfone,
diphenyl sulfone,
methylphenyl sulfone,
dibutyl disulfide,
dicyclohexyl disulfide,
tetramethylthiuram monosulfide,
N,N-dimethylmethanesulfonamide, and
N,N-diethylmethanesulfonamide.

Among these, ethylene carbonate and/or propylene carbonate, which is cyclic carbonate, is preferably used. Furthermore, a cyclic carbonate and a chain carbonate may be preferably used in combination.

In the case where a cyclic carbonate and a chain carbonate are used in combination as the nonaqueous solvent, the proportion of the chain carbonate in the nonaqueous solvent of the nonaqueous electrolytic solution of the present invention is usually 20% by volume or more and preferably 40% by volume or more, and usually 95% by volume or less and preferably 90% by volume or less. The proportion of the cyclic carbonate in the nonaqueous solvent of the nonaqueous electrolytic solution of the present invention is usually 5% by volume or more and preferably 10% by volume or more, and usually 70% by volume or less and preferably 50% by volume or less. An excessively low proportion of the chain carbonate can cause an increase in the viscosity of the nonaqueous electrolytic solution of the present invention. An excessively high proportion of the chain carbonate can cause a reduction in the degree of dissociation of a lithium salt serving as an electrolyte, thereby reducing the electrical conductivity of the nonaqueous electrolytic solution of the present invention.

### [1-5. Electrolyte]

In the present invention, a lithium salt is used as an electrolyte for the nonaqueous electrolytic solution.

Examples of the electrolyte include:
inorganic lithium salts, such as
LiClO₄,
LiAsF₆,
LiPF₆,
Li₂CO₃, and
LiBF₄;
fluorine-containing organic lithium salts, such as
LiCF₃SO₃,
LiN (CF₃SO₂) ₂,
LiN (C₂F₅SO₂) ₂,
lithium 1,3-hexafluoropropanedisulfonylimide (cyclic),
lithium 1,2-tetrafluoroethanedisulfonylimide (cyclic),
LiN (CF₃SO₂) (C₄F₉SO₂)
LiC (CF₃SO₂)₃,
LiPF₄(CF₃)₂,
LiPF₄(C₂F₅)₂,
LiPF₄(CF₃SO₂)₂,
LiPF₄(C₂F₅SO₂)₂,
LiBF₂(CF₃)₂,
LiBF₂(C₂F₅)₂,
LiBF₂(CF₃SO₂)₂, and
LiBF₂(C₂F₅SO₂)₂;
dicarboxylic acid complex lithium salts, such as
lithium bis(oxalato)borate,
lithium tris(oxalato)phosphate, and
lithium difluorooxalatoborate.

Among these, LiPF₆, LiBF₄, LiCF₃SO₃, LiN(CF₃SO₂)₂, LiN(C₂F₅SO₂)₂, and lithium 1,2-tetrafluoroethanedisulfonylimide (cyclic) are preferred. In particular, LiPF₆ and LiBF₄ are preferred.

The electrolytes may be used either alone or in any combination of two or more in any proportion. Among these, a specific combination of two or more types of inorganic lithium salts or a combination of an inorganic lithium salt and a fluorine-containing organic lithium salt are preferred because gas generation is suppressed during trickle charge or deterioration after high-temperature storage is suppressed. In particular, a combination of LiPF₆ and LiBF₄ or a combination of an inorganic lithium salt, e.g., LiPF₆ or LiBF₄, and a fluorine-containing lithium salt, e.g., LiCF₃SO₃, LiN(CF₃ SO₂)₂, or LiN(C₂F₅SO₂)₂ is preferred.

In the case of the combination of LiPF₆ and LiBF₄, preferably, the proportion of LiBF₄ is usually in the range of 0.01% by weight to 50% by weight with respect to the total amount of the electrolytes. LiBF₄ has a low degree of dissociation; hence, an excessively high proportion thereof can cause an increase in the resistance of the electrolytic solution.

Meanwhile, in the case of the combination of the inorganic lithium salt, e.g., LiPF₆or LiBF₄ and the fluorine-containing organic lithium salt, e.g., LiCF₃SO₃, LiN(CF₃ SO₂)₂, or LiN(C₂F₅SO₂)₂, preferably, the proportion of the inorganic lithium salt is usually in the range of 70% by weight to 99% by weight with respect to the total amount of the electrolytes. In general, the fluorine-containing organic lithium salt has a larger molecular weight than that of the inorganic lithium salt. Thus, an excessively high proportion of the fluorine-containing organic lithium salt can cause a reduction in the proportion of the solvent in the total electrolytic solution, thereby increasing the resistance of the electrolytic solution.

Any concentration of the lithium salt in the nonaqueous electrolytic solution of the present invention may be used so long as the advantage of the present invention is not significantly impaired. The concentration is usually 0.5 mol·dm⁻³ or more, preferably 0.6 mol-dm⁻³ or more, and more preferably 0.8 mol·dm⁻³ or more, and usually 3 mol·dm⁻³ or less, preferably 2 mol·dm⁻³ or less, and more preferably 1.5 mol·dm⁻³ or less. An excessively low concentration of the lithium salt can result in the nonaqueous electrolytic solution having an insufficient electrical conductivity. An excessively high concentration can result in a reduction in electrical conductivity due to an increase in viscosity, thus reducing the performance of the nonaqueous electrolyte secondary battery including the nonaqueous electrolytic solution of the present invention.

### [1-6. Additive]

The nonaqueous electrolytic solution of the present invention may contain any additive so long as the advantage of the present invention is not significantly impaired. Any known additive may be used as the additive.

The additive may be used either alone or in any combination of two or more in any proportion.

Examples of the additive include overcharge-preventing agents and aids for improving capacity retention characteristics and cycle characteristics after high-temperature storage.

Specific examples of the overcharge-preventing agents include
aromatic compounds, such as
biphenyl,
alkylbiphenyl,
terphenyl,
partially hydrogenated terphenyl,
cyclohexylbenzene,
t-butylbenzene,
t-amylbenzene,
diphenyl ether, and
dibenzofuran;
partially fluorinated compounds of the aromatic compounds described above, such as
2-fluorobiphenyl,
o-cyclohexylfluorobenzene, and
p-cyclohexylfluorobenzene; and
fluorine-containing anisoles, such as
2,4-difluoroanisole,
2,5-difluoroanisole, and
2,6-difluoroanisole.

These overcharge-preventing agents may be used either alone or in any combination of two or more in any proportion.

In the case where the nonaqueous electrolytic solution of the present invention contains the overcharge-preventing agent, the nonaqueous electrolytic solution may have any overcharge-preventing agent concentration so long as the advantage of the present invention is not significantly impaired. Preferably, the concentration of the overcharge-preventing agent is usually in the range of 0.1% by weight to 5% by weight with respect to the total nonaqueous electrolytic solution. The incorporation of the overcharge-preventing agent into the nonaqueous electrolytic solution inhibits the nonaqueous electrolyte secondary battery from bursting and igniting due to overcharge, improves the safety of the nonaqueous electrolyte secondary battery, and is thus preferred.

Specific examples of the aids for improving capacity retention characteristics and cycle characteristics after high-temperature storage include:
dicarboxylic anhydrides, such as
succinic acid,
maleic acid, and
phthalic acid;
carbonate compounds, such as
erythritan carbonate, and
spiro-bis-dimethylene carbonate;
sulfur-containing compounds, such as
ethylene sulfite,
1,3-propane sultone,
1,4-butane sultone,
methyl methanesulfonate,
busulfan,
sulfolane,
sulfolane,
dimethyl sulfone,
diphenyl sulfone,
methylphenyl sulfone,
dibutyl disulfide,
dicyclohexyl disulfide,
tetramethylthiuram monosulfide,
N,N-dimethylmethanesulfonamide, and
N,N-diethylmethanesulfonamide;
nitrogen-containing compounds, such as
1-methyl-2-pyrrolidinone,
1-methyl-2-piperidone,
3-methyl-2-oxazolidinone,
1,3-dimethyl-2-imidazolidinone, and
N-methylsuccinimide;
hydrocarbon compounds, such as
heptane,
octane, and
cycloheptane; and
fluorine-containing aromatic compounds, such as
fluorobenzene,
difluorobenzene, and
benzotrifluoride.

These aids may be used either alone or in any combination of two or more in any proportion.

In the case where the nonaqueous electrolytic solution of the present invention contains the aid, any concentration of the aid may be used so long as the advantage of the present invention is not impaired. Preferably, the concentration of the aid is in the range of usually 0.1% by weight to 5% by weight with respect to the total nonaqueous electrolytic solution.

### [2. Nonaqueous Electrolyte Secondary Battery]

The nonaqueous electrolyte secondary battery of the present invention is the same as a known nonaqueous electrolyte secondary battery, except for the negative electrode and the nonaqueous electrolytic solution. The nonaqueous electrolyte secondary battery of the present invention usually has a structure in which a positive electrode and a negative electrode are stacked with a porous film (separator) provided therebetween, the porous film containing the nonaqueous electrolytic solution of the present invention, and in which these components are accommodated in a case (housing). The shape of the nonaqueous electrolyte secondary battery of the present invention is not particularly limited. The nonaqueous electrolyte secondary battery may have any shape, e.g., a cylindrical shape, an angular shape, a laminate shape, a coin shape, or a large shape.

### [2-1. Nonaqueous Electrolytic Solution]

The nonaqueous electrolytic solution of the present invention described above is used as a nonaqueous electrolytic solution. The nonaqueous electrolytic solution of the present invention may be mixed with another nonaqueous electrolytic solution, and the resulting mixed solution may be used without departing from the scope of the present invention.

### [2-2. Negative Electrode]

A negative electrode for use in the nonaqueous electrolyte secondary battery of the present invention contains a negative-electrode active material having at least one atom selected from the group consisting of a Si (silicon) atom, a Sn (tin) atom, and a Pb (lead) atom (hereinafter, also referred to as "specific metal elements").

Examples of the negative-electrode active material having at least one atom selected from the specific metal elements include one elemental metal selected from the specific metal elements; alloys of two or more metal elements of the specific metal elements; alloys of one or two or more metal elements of the specific metal elements and one or two or more other metal elements; and compounds containing one or two or more metal elements of the specific metal elements. The use of the elemental metal, the alloy, or the metal compound as the negative-electrode active material results in a higher capacity of a battery.

Examples of the compounds containing one or two or more metal elements of the specific metal elements include complex compounds of carbides, oxides, nitrides, sulfides, and phosphides, each containing one or two or more metal elements selected from the specific metal elements.

Furthermore, compounds in which these complex compounds are complexly bonded to several elements such as metal elements, alloys, and nonmetallic elements are also exemplified. More specifically, with respect to Si and Sn, alloys of a metal that does not serve as a negative electrode and either Si or Sn can be used for example. With respect to Sn, for example, a complex compound containing 5 to 6 elements and composed of a combination of Sn, a metal serving as a negative electrode and being different from Si, Sn, and Pb, a metal not serving as a negative electrode, and a nonmetallic element, can also be used.

Among these negative-electrode active materials, one elemental metal selected from the specific metal elements, alloys of two or more metal elements of the specific metal elements, and oxides, carbides, nitrides, and so forth of the specific metal elements are preferred because when batteries including these materials are produced, the resulting batteries have large capacities per unit weight. In particular, the elemental metal, alloys, oxides, carbides, nitrides, and so forth of Si and/or Sn are preferred from the viewpoint of capacity per unit weight and environmental load.

The following compounds containing Si and/or Sn are also preferred because they have lower capacities per unit weight than elemental metals or alloys but have excellent cycle characteristics:
oxides of Si and/or Sn, in which the element ratio of Si and/or Sn to oxygen is usually 0.5 or more, preferably 0.7 or more, more preferably 0.9 or more, and usually 1.5 or less, preferably 1.3 or less, and more preferably 1.1 or less;
nitrides of Si and/or Sn, in which the element ratio of Si and/or Sn to nitrogen is usually 0.5 or more, preferably 0.7 or more, and more preferably 0.9 or more, and usually 1.5 or less, preferably 1.3 or less, and more preferably 1.1 or less; and
carbides of Si and/or Sn, in which the element ratio of Si and/or Sn to carbon is usually 0.5 or more, preferably 0.7 or more, and more preferably 0.9 or more, and usually 1.5 or less, preferably 1.3 or less, and more preferably 1.1 or less.

These negative-electrode active materials may be used either alone or in any combination of two or more in any proportion.

The negative electrode for use in the nonaqueous electrolyte secondary battery of the present invention can be produced by a common method. Specific examples of a method for producing the negative electrode include a method in which a mixture of the negative-electrode active material, a binder, a conductive material, and so forth is subjected to roll forming to form a sheet electrode; and a method in which compression molding is performed to form a pellet electrode. Usually, a method in which a thin layer (negative-electrode active material layer) containing the foregoing negative-electrode active material is formed on a current collector for the negative electrode (hereinafter, also referred to as a "negative electrode current collector") by application, evaporation, sputtering, plating, or the like. In this case, a binder, a thickener, a conductive material, a solvent, and so forth are added to the negative-electrode active material to form a slurry. The resulting slurry is applied to a negative electrode current collector, followed by drying and pressing to increase the density. Thereby, the negative-electrode active material layer is formed on the negative electrode current collector.

Examples of a material constituting the negative electrode current collector include steel, copper alloys, nickel, nickel alloys, and stainless steel. Among these, copper foil is preferred from the viewpoint of easy processing for thin films and cost.

The negative electrode current collector has a thickness of usually 1 µm or more and preferably 5 µm or more and usually 100 µm or less and preferably 50 µm or less. An excessively large thickness of the negative electrode current collector may result in an excessively reduction in the capacity of a battery as a whole. In contrast, an excessively small thickness of the negative electrode current collector may lead to poor handleability.

To improve the binding effect on the negative-electrode active material layer formed on the surface, the surface of the negative electrode current collector is preferably subjected to roughening treatment in advance. Examples of a method for roughening the surface include blasting; rolling with a rough-surface roll; mechanical polishing in which a surface of a current collector is polished with an abrasive particle-coated abrasive, a grindstone, an emery wheel, a wire brush having steel wire, or the like; electropolishing, and chemical polishing.

To reduce the weight of the negative electrode current collector to improve the energy density per weight of the battery, a perforated negative electrode current collector having an expanded metal form or a perforated metal form may also be used. In this type of negative electrode current collector, the weight can be desirably changed by changing the opening ratio. In the case where negative-electrode active material layers are formed on both sides of this type of negative electrode current collector, the negative-electrode active material layers are not very easily detached owing to a rivet effect provided through the openings. An excessively high opening ratio, however, may result in a reduction in the contact area between the negative-electrode active material layers and the negative electrode current collector, thereby reducing bonding strength.

A slurry for forming the negative-electrode active material layer is usually prepared by adding a binder, a thickener, and so forth to a negative-electrode material. The term "negative-electrode material" used in this specification indicates a material including the negative-electrode active material and the conductive material.

The proportion of the negative-electrode active material in the negative-electrode material is usually 70% by weight or more and preferably 75% by weight or more, and usually 97% by weight or less and preferably 95% by weight or less. An excessively low proportion of the negative-electrode active material is liable to cause a secondary battery including the resulting negative electrode to have an insufficient capacity. An excessively high proportion of the negative-electrode active material is liable to lead to the difficulty in ensuring the negative electrode having good electrical conductivity because the conductive material content is relatively insufficient. In the case of using two or more negative-electrode active materials in combination, the total amount of the negative-electrode active materials may satisfy the above range.

Examples of the conductive material used for the negative electrode include metal materials, such as copper and nickel; and carbon materials, such as graphite and carbon black. These materials may be used either alone or in any combination of two or more in any proportion. In particular, a carbon material as the conductive material is preferably used because the carbon material functions also as an active material. The proportion of the conductive material in the negative-electrode material is usually 3% by weight or more and preferably 5% by weight or more, and usually 30% by weight or less and preferably 25% by weight or less. An excessively low proportion of the conductive material is liable to lead to insufficient conductivity. An excessively high proportion of the conductive material is liable to cause a reduction in battery capacity and strength because the proportions of the negative-electrode active material and so forth are relatively insufficient. In the case of using two or more conductive materials in combination, the total amount of the conductive materials may satisfy the above range.

With respect to the binder for use in the negative electrode, any binder can be used so long as it is safe for a solvent and an electrolytic solution used in producing the electrode. Examples thereof include polyvinylidene fluoride, polytetrafluoroethylene, polyethylene, polypropylene, styrene-butadiene rubber, isoprene rubber, butadiene rubber, ethylene-acrylic acid copolymers, and ethylene-methacrylic acid copolymers. These materials may be used either alone or in any combination of two or more in any proportion. Preferably, the proportion of the binder is usually 0.5 parts by weight or more and particularly 1 part by weight or more, and usually 10 parts by weight or less and particularly 8 parts by weight or less with respect to 100 parts by weight of the negative-electrode material. An excessively low proportion of the binder is liable to lead to the resultant negative electrode having insufficient strength. An excessively high proportion of the binder is liable to lead to insufficient battery capacity and strength because the proportions of the negative-electrode active material and the like are relatively deficient. In the case of using two or more binders in combination, the total amount of the binders may satisfy the above range.

Examples of the thickener for use in the negative electrode include carboxymethyl cellulose, methyl cellulose, hydroxymethyl cellulose, ethyl cellulose, polyvinyl alcohol, starch oxide, starch phosphate, and casein. These materials may be used either alone or in any combination of two or more in any proportion. The thickener may be used as needed. In the case of using the thickener, the thickener is preferably used in the negative-electrode active material layer in a proportion of usually 0.5% by weight to 5% by weight.

A slurry for forming the negative-electrode active material layer is prepared by adding the conductive material, the binder, and the thickener, as needed, to the negative-electrode active material in an aqueous solvent or organic solvent serving as a dispersion medium. As the aqueous solvent, water is usually used. Alternatively, a mixed solvent in which an organic solvent, such as alcohol, e.g., ethanol, or cyclic amide, e.g., N-methylpyrrolidone, is incorporated in water in a concentration of 30% by weight or less with respect to water may be used. Examples of the organic solvent usually used include cyclic amides such as N-methylpyrrolidone; linear amides, such as N,N-dimethylformamide and N,N-dimethylacetamide; aromatic hydrocarbons, such as anisole, toluene, and xylene; and alcohols, such as butanol and cyclohexanol. Among these, cyclic amides such as N-methylpyrrolidone and linear amides, such as N,N-dimethylformamide and N,N-dimethylacetamide, are preferred. These materials may be used either alone or in any combination of two or more in any proportion.

The resulting slurry is applied onto the negative electrode current collector, followed by drying and pressing to form a negative-electrode active material layer. Any known application method can be employed without limitation. Also, a drying method is not particularly limited. Known methods, such as air drying, drying by heating, and drying under reduced pressure, can be employed.

The electrode structure of an electrode produced from the negative-electrode active material by the foregoing method is not particularly limited. The active material present on the current collector preferably has a density of 1 g·cm⁻³ or more, more preferably 1.2 g·cm⁻³ or more, and still more preferably 1.3 g·cm⁻³ or more. The upper limit is 2g·cm or less, preferably 1.9 g·cm⁻³ or less, more preferably 1.8 g·cm⁻³ or less, and still more preferably 1.7 g·cm⁻³ or less. A density exceeding the above range can cause the break of active material particles, thereby increasing the initial irreversible capacity and reducing the permeability of the nonaqueous electrolytic solution to and around the interface between the current collector and the active material to cause a deterioration in charge-discharge characteristic at a high current density. A density of less than the above range can result in a reduction in the conductivity between active material particles, thus increasing battery resistance to cause a reduction in capacity per unit volume.

### [2-3. Positive Electrode]

A positive-electrode active material contained in a positive electrode for use in the nonaqueous electrolyte secondary battery of the present invention is not particularly limited so long as it is capable of electrochemically storing and releasing lithium ions. For example, a material containing lithium and at least one transition metal is preferred. Specific examples thereof include lithium-transition metal complex oxides and lithium-containing transition-metal phosphate compounds.

Preferred examples of transition metals used in the lithium-transition metal complex oxides include V, Ti, Cr, Mn, Fe, Co, Ni, and Cu. Specific examples of the complex oxides include lithium-cobalt complex oxides such as LiCoO₂; lithium-nickel complex oxides such as LiNiO₂; lithium-manganese complex oxides, such as LiMnO₂, LiMn₂O₄, and Li₂MnO₄; and compounds in which transition metal atoms mainly constituting these lithium-transition metal complex oxides are partially substituted with another metal, e.g., Al, Ti, V, Cr, Mn, Fe, Co, Li, Ni, Cu, Zn, Mg, Ga, Zr, or Si.

Specific examples of the substituted compounds include LiNi_{0.5}Mn_{0.5}O₂, LiNi_{0.85}Co_{0.10}Al_{0.05}O₂, LiNi_{0.33}Co_{0.33}Mn_{0.33}O₂, LiMn_{1.8}Al_{0.2}O₄, and LiMn_{1.5}Ni_{0.5}O₄.

Preferred examples of transition metals used in the lithium-containing transition-metal phosphate compounds include V, Ti, Cr, Mn, Fe, Co, Ni, and Cu. Specific examples of the phosphate compounds include iron phosphates, such as LiFePO₄, Li₃Fe₂(PO₄)₃, and LiFeP₂O₇; cobalt phosphates such as LiCoPO₄; and compounds in which transition metal atoms mainly constituting these lithium-transition metal complex oxides are partially substituted with another metal, e.g., Al, Ti, V, Cr, Mn, Fe, Co, Li, Ni, Cu, Zn, Mg, Ga, Zr, Nb, or Si.

A material in which a substance (hereinafter, appropriately referred to as a "surface adhesion substance") having a composition different from a substance constituting the positive-electrode active material, which is a main component, is attached on a surface of the positive-electrode active material may be used. Examples of the surface adhesion substance include oxides, such as aluminum oxide, silicon oxide, titanium oxide, zirconium oxide, magnesium oxide, calcium oxide, boron oxide, antimony oxide, and bismuth oxide; sulfates, such as lithium sulfate, sodium sulfate, potassium sulfate, magnesium sulfate, calcium sulfate, and aluminum sulfate; and carbonates, such as lithium carbonate, calcium carbonate, and magnesium carbonate.

Each of the surface adhesion substances can be attached on a surface of the positive-electrode active material by, for example, a method including dissolving or suspending the surface adhesion substance in a solvent, impregnating the positive-electrode active material with the resulting solution or suspension, and performing drying; a method including dissolving or suspending a precursor of the surface adhesion substance in a solvent, impregnating the positive-electrode active material with the resulting solution or suspension, and bringing about reaction by heating or the like; or a method including adding the surface adhesion substance to a precursor of the positive-electrode active material and then performing co-firing.

The mass of the surface adhesion substance attached on a surface of the positive-electrode active material is usually 0.1 ppm or more, preferably 1 ppm or more, and more preferably 10 ppm or more, and usually 20% or less, preferably 10% or less, and more preferably 5% or less with respect to the mass of the positive-electrode active material.

The use of the surface adhesion substance suppresses the oxidation reaction of the nonaqueous electrolytic solution on the surface of the positive-electrode active material, thereby improving the lifetime of the battery. However, when the amount of the surface adhesion substance added is less than the above range, the effect is not sufficiently provided. When the amount exceeds the above range, the movement of lithium ions can be inhibited to increase resistance. Thus, the above range is preferred.

The shape of particles of the positive-electrode active material may be any of commonly used block, polyhedral, spherical, ellipsoidal, plate-like, acicular, columnar, and other shapes such as those in common use. Among these, it is preferred that the shape of secondary particles formed by the aggregation of primary particles be sphere or ellipsoid.

In general, when an electrochemical element is charged and discharged, an active material in an electrode is expanded and contracted. Thus, deterioration, e.g., the fracture of the active material and the breaking of a conductive path, is liable to occur because of the stress caused by the expansion and contraction. Hence, an active material composed of secondary particles formed by the aggregation of primary particles is preferred rather than a single-particle active material composed of only primary particles because the stress caused by expansion and contraction is relieved to prevent deterioration.

Furthermore, spherical or ellipsoidal particles are preferred rather than axially oriented particles, e.g., plate-like particles, because the spherical or ellipsoidal particles are less apt to orient during electrode forming and thus the expansion and contraction of the resulting electrode are reduced during charging and discharging, and because it is easy to uniformly mix the spherical or ellipsoidal particles with a conductive material in electrode formation.

The tap density of the positive-electrode active material is usually 1.3 g·cm⁻³ or more, preferably 1.5 g·cm⁻³ or more, more preferably 1.6 g·cm⁻³ or more, and particularly preferably 1.7 g·cm⁻³ or more, and usually 2.5 g·cm⁻³ or less and preferably 2.4 g·cm⁻³ or less.

The use of a metal complex oxide having a high tap density can form a positive-electrode active-material layer having a high density. Thus, a tap density of the positive-electrode active material of less than the above-described range can result in increases in the amounts of a dispersion medium, a conductive material, and a binder needed for the formation of the positive-electrode active-material layer, thereby leading to a limited packing factor of the positive-electrode active material in the positive-electrode active-material layer and a limited battery capacity. In general, a higher tap density is preferred. The upper limit of the tap density is not particularly determined. A tap density of less than the above range can be liable to cause a reduction in load characteristics because the diffusion of lithium ions in the positive-electrode active-material layer through the nonaqueous electrolytic solution as a medium is a rate-determining factor.

The tap density is measured as follows: A sample passing through a sieve with 300-µm openings is poured into a 20-cm³ tapping cell to fill the capacity of the cell with the sample. Tapping operations are performed 1000 times with a stroke length of 10 mm using a powder density meter (for example, Tap Denser, manufactured by Seishin Enterprise Co., Ltd.). The density is calculated from the resultant volume and weight of the sample. The tap density determined from the measurement is defined as the tap density of the positive-electrode active material of the present invention.

The median diameter d₅₀ (secondary-particle diameter in the case where secondary particles are formed by the aggregation of primary particles) of particles of the positive-electrode active material is usually 0.1 µm or more, preferably 0.5 µm or more, more preferably 1 µm or more, and particularly preferably 3 µm or more, and usually 20 µm or less, preferably 18 µm or less, more preferably 16 µm or less, and particularly preferably 15 µm or less. A median diameter d₅₀ of less than the above range can fail to form an electrode with a high bulk density. A median diameter d₅₀ exceeding the above range leads to a longer time needed for the diffusion of lithium in particles, which can reduce battery characteristics. Furthermore, when the positive electrode of a battery is formed, i.e., when a slurry of the active material and other components including a conductive material and a binder dispersed in a solvent is applied to form a thin film, for example, streaks occur in some cases.

In addition, packing properties can be further improved by mixing two or more positive-electrode active materials having different median diameters d₅₀ in any proportion when the positive electrode is formed.

The median diameter d₅₀ of the positive-electrode active-material particles can be measured with a particle-size distribution analyzer LA-920 (manufactured by HORIBA, Ltd.) set at a measuring refractive index of 1.24 using a 0.1% by weight aqueous solution of sodium hexametaphosphate as a dispersion medium after five-minute ultrasonic dispersing treatment. Alternatively, the median diameter d₅₀ of the positive-electrode active-material particles can also be measured with a known laser diffraction/scattering type particle size distribution analyzer.

In the case of secondary particles formed by the aggregation of primary particles, the average primary-particle diameter of the positive-electrode active material is usually 0.01 µm or more, preferably 0.05 µm or more, more preferably 0.08 µm or more, and particularly preferably 0.1 µm or more, and usually 3 µm or less, preferably 2 µm or less, more preferably 1 µm or less, and particularly preferably 0.6 µm or less.

An average primary-particle diameter exceeding the above range leads to difficulty in forming spherical secondary particles, thus adversely affecting the powder packing properties. Furthermore, a significant reduction in specific surface area is very likely to cause a reduction in battery performance such as output characteristics, in some cases. An average primary-particle diameter of less than the above range can cause a reduction in the performance of the resulting secondary battery, e.g., poor charge-discharge reversibility, due to insufficiently grown grains.

The average primary-particle diameter of the positive-electrode active material is measured by observation with a scanning electron microscope (SEM). Specifically, for arbitrarily selected 50 primary particles in an image captured at a magnification of 10,000x, the length of the longest segment of a horizontal line that extends across each primary particle from one side to the other side of the boundary is determined. The average primary-particle diameter is determined by averaging the measured lengths.

With respect to the BET specific surface area of the positive-electrode active material, the specific surface area measured by the BET method is usually 0.2 m²·g⁻¹ or more, preferably 0.3 m²·g⁻¹ or more, and more preferably 0.4m²·g⁻¹ or more, and usually 4.0 m²·g⁻¹ or less, preferably 2.5 m²·g⁻¹ or less, and more preferably 1.5 m²·g⁻¹ or less.

A BET specific surface area of less than the above range is liable to cause a reduction in battery performance. At a BET specific surface area exceeding the above range, it is difficult to provide a high tap density, which can reduce applicability in forming a positive-electrode.

The BET specific surface area is measured with a surface area meter (e.g., a fully automatic surface area measuring apparatus manufactured by Ohkura Riken Co., Ltd). The specific surface area is determined as follows: A sample is preliminarily dried at 150°C for 30 minutes in a nitrogen stream. The specific surface area is measured by the gas-flowing nitrogen adsorption BET one-point method using a nitrogen/helium mixture gas precisely regulated in such a manner that the relative nitrogen pressure is 0.3 with respect to atmospheric pressure. The specific surface area determined by the measurement is defined as the BET specific surface area of the positive-electrode active material.

A method for producing the positive-electrode active material is not particularly limited so long as it does not depart from the scope of the present invention. Several methods can be employed. Methods commonly employed as methods for producing inorganic compounds may be employed.

In particular, to produce spherical or ellipsoidal active materials, various methods may be employed. An example of the methods is a method including either dissolving or pulverizing and dispersing a transition metal raw material, e.g., a transition metal nitrate or transition metal sulfate, optionally together with a raw material of another element in a solvent such as water, regulating the pH of the resulting solution or dispersion with stirring to produce a spherical precursor, recovering and optionally drying the precursor, subsequently adding a Li source, e.g., LiOH, Li₂CO₃, or LiNO₃, to the recovered precursor, and firing the mixture at a high temperature to afford the active material.

Another example thereof is a method including either dissolving or pulverizing and dispersing a transition metal raw material, e.g., a transition metal nitrate, sulfate, hydroxide, or oxide, optionally together with a raw material of another element in a solvent such as water, drying and forming the solution or dispersion with a spray dryer or the like into a spherical or ellipsoidal precursor, adding a Li source, e.g., LiOH, Li₂CO₃, or LiNO₃, to the precursor, and firing the mixture at a high temperature to afford the active material.

Another example thereof is a method including either dissolving or pulverizing and dispersing a transition metal raw material, e.g., a transition metal nitrate, sulfate, hydroxide, or oxide, a Li source, e.g., LiOH, Li₂CO₃, or LiNO₃, and optionally with a raw material of another element in a solvent such as water, drying and forming the solution or dispersion with a spray dryer or the like into a spherical or ellipsoidal precursor, and firing the precursor at a high temperature to afford the active material.

The structure and production method of the positive electrode used in the present invention will be described below.

The positive electrode is produced by forming a positive-electrode active-material layer that contains a positive-electrode active material and a binder on a current collector.

Any known method for producing a positive electrode containing a positive-electrode active material may be employed. That is, a positive-electrode active material and a binder are mixed by a dry process optionally together with a conductive material, thickener, and so forth. The resulting mixture is formed into a sheet. The sheet is press-bonded to a positive-electrode current collector. Alternatively, those materials are dissolved or dispersed in a liquid medium to form a slurry. The resulting slurry is applied to a positive-electrode current collector and dried, forming a positive-electrode active-material layer on the current collector, whereby the positive electrode is produced.

The proportion of the positive-electrode active material in the positive-electrode active-material layer is usually 10% by weight or more, preferably 30% by weight or more, and particularly preferably 50% by weight or more, and usually 99.9% by weight or less and preferably 99% by weight or less. A proportion of the positive-electrode active material in the positive-electrode active-material layer of less than the above range can result in insufficient electric capacity. A proportion exceeding the above range can result in insufficient strength of the positive electrode. A single-type of positive-electrode active material powder may be used alone. Alternatively, any two or more types of positive-electrode active material powders having different compositions or different powder properties may be combined in any proportion.

As the conductive material, any known conductive material may be used. Specific examples thereof include metal materials, such as copper and nickel; and carbonaceous materials, such as graphite, e.g., natural graphite and artificial graphite, carbon black, e.g., acetylene black, and amorphous carbon, e.g., needle coke. These materials may be used either alone or in any combination of two or more in any proportion.

The proportion of the conductive material in the positive-electrode active material layer is usually 0.01% by weight or more, preferably 0.1% by weight or more, and more preferably 1% by weight or more, and usually 50% by weight or less, preferably 30% by weight or less, and more preferably 15% by weight or less. A proportion of the conductive material of less than the above range can result in insufficient conductivity. A proportion exceeding the above range can cause a reduction in battery capacity.

The binder used for the production of the positive-electrode active material layer is not particularly limited so long as the binder is composed of a material stable to a solvent used for the production of the nonaqueous electrolytic solution and the electrode.

In the case of employing the application method, any binder can be used so long as it is composed of a material that can be dissolved or dispersed in a liquid medium used in producing the electrode. Specific examples thereof include resin-like polymers, such as polyethylene, polypropylene, polyethylene terephthalate, polymethyl methacrylate, aromatic polyamide, cellulose, and nitrocellulose; rubbery polymers, such as styrene-butadiene rubber (SBR), acrylonitrile-butadiene rubber (NBR), fluorocarbon rubber, isoprene rubber, butadiene rubber, and ethylene-propylene rubber; thermoplastic elastomer-based polymers, such as styrene-butadiene-styrene block copolymers and hydrogenated products thereof, ethylene-propylene-diene ternary copolymers (EPDM), styrene-ethylene-butadiene-ethylene copolymers, and styrene-isoprene-styrene block copolymers and hydrogenated products thereof; flexible resin-like polymers, such as syndiotactic-1,2-polybutadiene, polyvinyl acetate, ethylene-vinyl acetate copolymers, and propylene-α-olefin copolymers; fluorinated polymers, such as polyvinylidene fluoride (PVdF), polytetrafluoroethylene, fluorinated polyvinylidene fluoride, and polytetrafluoroethylene-ethylene copolymers; and polymeric compositions having ionic conductivity of alkali metal ions (in particular, lithium ions). These materials may be used either alone or in any combination of two or more in any proportion.

The proportion of the binder in the positive-electrode active material layer is usually 0.1% by weight or more, preferably 1% by weight or more, and more preferably 3% by weight or more, and usually 80% by weight or less, preferably 60% by weight or less, more preferably 40% by weight or less, and particularly preferably 10% by weight or less.

At a proportion of the binder of less than the above range, the positive-electrode active material is not sufficiently held, and the positive electrode has insufficient mechanical strength, so that battery performance such as cycle characteristics can be deteriorated. A proportion exceeding the above range can lead to reductions in battery capacitance and conductivity.

The type of liquid medium used for forming a slurry is not particularly limited so long as the positive-electrode active material, a conductive agent, the binder, and, if necessary, the thickener can be dissolved or dispersed in the liquid medium. Aqueous solvents and organic solvents may be used.

Examples of aqueous solvents include water and mixed solvents of alcohol and water. Examples of organic solvents include aliphatic hydrocarbons such as hexane; aromatic hydrocarbons such as benzene, toluene, xylene, and methylnaphthalene; heterocyclic compounds, such as quinoline and pyridine; ketones, such as acetone, methyl ethyl ketone, and cyclohexanone; esters, such as methyl acetate and methyl acrylate; amines, such as diethylenetriamine, and N,N-dimethylaminopropylamine; ethers, such as diethyl ether and tetrahydrofuran (THF); amides, such as N-methylpyrrolidone (NMP), dimethylformamide, dimethylacetamide; and aprotic polar solvents, such as hexamethylphosphoramide and dimethyl sulfoxide. These compounds may be used either alone or in any combination of two or more in any proportion.

In the case of using the aqueous solvent as a liquid medium for the formation of a slurry, the slurry is preferably formed using the thickener and latex of styrene-butadiene rubber (SBR) or the like. The thickener is usually used to adjust the viscosity of the slurry.

The thickener is not limited so long as the advantage of the present invention is not significantly impaired. Specific examples of the thickener include carboxymethyl cellulose, methyl cellulose, hydroxymethyl cellulose, ethyl cellulose, polyvinyl alcohol, starch oxide, starch phosphate, and casein, and salts thereof. These compounds may be used either alone or in any combination of two or more in any proportion.

In the case of using the thickener, the proportion of the thickener is usually 0.1% by weight or more, preferably 0.5% by weight or more, and more preferably 0.6% by weight or more, and usually 5% by weight or less, preferably 3% by weight or less, and more preferably 2% by weight or less with respect to the active material. A proportion of the thickener of less than the above range can result in a significant reduction in applicability. A proportion of the thickener exceeding the above range can result in a reduction in the proportion of the active material in the positive-electrode active material layer, thereby causing problems of a reduction in battery capacity and an increase in the resistance between the positive-electrode active material particles.

The positive-electrode active material layer obtained by application and drying is preferably compacted by hand pressing, roller pressing, or the like in order to increase packing density of the positive-electrode active material. The density of the positive-electrode active material layer is preferably 1g·cm⁻³ or more, more preferably 1.5 g·cm⁻³ or more, and particularly preferably 2 g·cm⁻³ or more, and preferably 4 g·cm⁻³ or less, more preferably 3.5 g·cm⁻³ or less, and particularly preferably 3 g·cm⁻³ or less. A density of the positive-electrode active-material layer exceeding the above range can result in a reduction in permeability of the nonaqueous electrolytic solution to and around the interface between the current collector and the active material, particularly reducing charge and discharge characteristics at a high current density. A density of less than the above range can result in a reduction in the conductivity between active material particles, thus increasing battery resistance.

Any known material for the positive electrode current collector may be used without limitation. Specific examples thereof include metal materials, such as aluminum, stainless steel, nickel-plating, titanium, and tantalum; and carbonaceous materials, such as carbon cloth and carbon paper. Among these, metal materials are preferred. In particular, aluminum is preferred.

In the case of a metallic material, examples of the shape of the current collector include metal foil, metal cylinders, metal coils, metal plates, thin metal films, expanded metals, punching metals, and metal foams. In the case of a carbon material, examples of the collector shape include carbon plates, thin carbon films, and carbon cylinders. Among these, a thin metal film is preferred. The thin film may be in a suitable mesh form.

The metal thin film may have any desired thickness. The thickness is usually 1 µm or more, preferably 3 µm or more, more preferably 5 µm or more, and usually 1 mm or less, preferably 100 µm or less, and more preferably 50 µm or less. A thickness of the metal thin film of less than the above range can result in the film having strength insufficient for a current collector. A thickness exceeding the above range can make handling the film difficult.

The thickness ratio of the thickness of the positive-electrode active-material layer to the current collector is not particularly limited. The value of (thickness of the active-material layer on one side just before impregnation with the nonaqueous electrolytic solution)/(thickness of the current collector) is usually 150 or less, preferably 20 or less, and particularly preferably 10 or less, and usually 0.1 or more, preferably 0.4 or more, and particularly preferably 1 or more. A thickness ratio of the positive-electrode active-material layer to the current collector exceeding the above range can cause the current collector to heat up because of Joule heat during charging and discharging at a high current density. A thickness ratio of less than the above range can result in an increase in the volume proportion of the current collector to the positive-electrode active material, thereby reducing the battery capacity.

The area of the positive-electrode active-material layer is preferably larger than the outer surface area of the case from the viewpoint of increase the stability at a high output and a high temperature. Specifically, the overall electrode area of the positive electrode is preferably at least 20 times and more preferably at least 40 times the surface area of the case of the secondary battery. When the battery has a bottomed polygonal shape, the term "outer surface area of the case" indicates a total area calculated from the length, width, and thickness dimensions of a case portion which is packed with power-generating elements and which excludes the terminal projections. When the battery has a bottomed cylindrical shape, that term indicates a geometric surface area obtained through the approximation to a cylinder of a case portion which is packed with power-generating elements and which excludes the terminal projections. The term "overall electrode area of the positive electrode" indicates the geometric surface area of a positive-electrode mix layer facing a mix layer containing a negative-electrode active material. In a structure in which a positive-electrode mix layer has been formed on each side of current collector foil, that term indicates the sum of the areas separately calculated respectively for both sides.

The thickness of a positive plate is not particularly limited. The thickness of the positive-electrode active-material layer on one side of the current collector, excluding the thickness of the current collector, is preferably 10 µm or more and more preferably 20 µm or more, and preferably 200 µm or less and more preferably 100 µm or less, from the viewpoint of achieving a high capacity, a high output, and high-rate characteristics.

### [2-4. Separator]

Usually, a separator is interposed between the positive electrode and the negative electrode to prevent shorting.

The material and the shape of the separator are not particularly limited. Any known separator may be used so long as the advantage of the present invention is not significantly impaired. Preferred examples of the separator include separators having excellent liquid retention properties and being in the form of porous sheets and nonwoven fabrics composed of materials, such as resins, glass fibers, and inorganic materials, stable to the nonaqueous electrolytic solution of the present invention.

Examples of a material for a resin or glass-fiber separator include polyolefins, such as polyethylene and polypropylene, polytetrafluoroethylene, polyethersulfone, and glass filters. Among these, glass filters and polyolefins are preferred. Polyolefins are more preferred. These materials may be used either alone or in any combination of two or more in any proportion.

The separator may have any thickness. The thickness is usually 1 µm or more, preferably 5 µm or more, and more preferably 10 µm or more, and usually 50 µm or less, preferably 40 µm or less, and more preferably 30 µm or less. An excessively smaller thickness of the separator than the above range can cause reductions in insulation performance and mechanical strength. An excessively larger thickness than the above range can cause a deterioration in battery performance such as rate characteristic and a reduction in the energy density of the nonaqueous electrolyte secondary battery as a whole.

In the case where the separator is formed of a porous component, for example, a porous sheet or a nonwoven fabric, the separator may have any porosity. The porosity is usually 20% or more, preferably 35% or more, and more preferably 45% or more, and usually 90% or less, preferably 85% or less, and more preferably 75% or less. An excessively lower porosity than the above range is liable to cause an increase in film resistance to deteriorate rate characteristics. An excessively higher porosity than the above range is liable to cause a reduction in mechanical strength of the separator to reduce insulation performance.

The separator usually has any average pore size. The average pore size is usually 0.5 µm or less and preferably 0.2 µm or less and usually 0.05 µm or more. An excessively larger average pore size than the above range is liable to cause a short circuit. An excessively smaller average pore size can result in an increase in film resistance to deteriorate rate characteristics.

Meanwhile, examples of inorganic materials that can be used include oxides, such as alumina and silicon dioxide; nitrides, such as aluminum nitride and silicon nitride; and sulfates, such as barium sulfate and calcium sulfate. These inorganic materials that can be used are in the form of particles or fibers.

A separator having a thin-film shape, e.g., a nonwoven fabric, a woven fabric, or a microporous film, is used. A thin-film-shaped separator having a porous size of 0.01 to 1 µm and a thickness of 5 to 50 µm is preferably used. A separator in which a porous composite layer including particles of the inorganic material is arranged on a surface of the positive electrode and/or negative electrode with a resin binder may be used in addition to the separator having a single thin-film shape. For example, a porous layer including alumina particles having a 90% particle size of less than 1 µm is arranged on either side of the positive electrode with a fluorocarbon resin serving as a binder.

### [2-5. Battery Design]

### <Electrode Group>

An electrode group may have one structure selected from a laminated structure in which the positive-electrode plate and a negative-electrode plate are stacked with the separator provided therebetween and a structure in which the positive-electrode plate and a negative-electrode plate are spirally wound with the separator provided therebetween. The proportion of the volume of the electrode group with respect to the internal volume of the battery (hereinafter, referred to as "electrode-group occupancy") is usually 40% or more and preferably 50% or more, and usually 90% or less and preferably 80% or less.

An electrode-group occupancy of less than the above range causes a reduction in battery capacity. An electrode-group occupancy exceeding the above range results in a small amount of void space. Thus, an increase in the temperature of the battery expands its components and increases the vapor pressure of the liquid component of the electrolytic solution, thereby increasing the internal pressure. This can reduce battery performance, e.g., charge-discharge cycle performance and high-temperature storage. Furthermore, a gas release valve configured to release the internal pressure to the outside can operate.

### <Structure of Current Collector >

The structure of the current collector is not particularly limited. To more effectively realize an improvement in cycle characteristics owing to the nonaqueous electrolytic solution of the present invention, it is preferable to use a structure in which wiring portions and joint portions each have a low resistance. In the case where the battery has a low internal resistance, the use of the nonaqueous electrolytic solution of the present invention particularly successfully provides the effects.

In the case where the electrode group has the foregoing laminated structure, it is preferable to use a structure in which a bunch of metal cores of the electrode layers is welded to a terminal. In the case where each electrode has a large area, the internal resistance is increased. It is thus preferable to arrange a plurality of terminals in the electrode to reduce the resistance. In the case of the electrode group having the wound structure, a plurality of lead structures may be arranged on each of the positive electrode and the negative electrode and bundled into a terminal, thereby reducing the internal resistance.

The optimization of the foregoing structure of the current collector minimizes the internal resistance. In a battery to be used at a high current, the impedance measured by a 10-kHz alternating-current method (hereinafter, referred to as a "direct-current resistance component") is preferably regulated to 10 milliohms (mΩ) or less and more preferably 5 milliohms (mΩ) or less.

A direct-current resistance component of 0.1 milliohms or less results in an increase in high-output characteristics. In this case, however, the proportion by volume of the structural materials for current collection increases, which can cause a reduction in battery capacity.

The nonaqueous electrolytic solution of the present invention is effective in reducing the reaction resistance relating to lithium deintercalation from and intercalating into the electrode active material. This is a factor which realizes satisfactory output characteristics. However, in a common battery having a direct-current resistance exceeding 10 milliohms (mΩ), the effects of reducing reaction resistance is not completely reflected in discharge characteristics at a low temperature because of inhibition by the direct-current resistance, in some cases. Thus, the use of a battery having a low direct-current resistance component improves this, so that the effects of the nonaqueous electrolytic solution of the present invention can be sufficiently provided.

### <Protective Element>

Examples of a protective element include a positive temperature coefficient (PTC), which increases in resistance upon abnormal heating-up or when an excessive current flows, a thermal fuse, a thermistor, and a valve (current cutoff valve) which breaks current flow through the circuit in abnormal heating-up on the basis of an abrupt increase in the internal pressure or internal temperature of the battery. It is preferred to select such a protective element that does not work under ordinary high-current use conditions. From the standpoint of a high output, it is preferred to employ a design which prevents abnormal heating-up and thermal runaway even without a protective element.

### <Case>

The nonaqueous electrolyte secondary battery of the present invention usually includes the nonaqueous electrolytic solution, the negative electrode, the positive electrode, the separator, and so forth accommodated in a case (housing). The case is not limited. Any known case may be used so long as the advantage of the present invention is not significantly impaired.

The material of the case is not particularly limited as long as it is stable to the nonaqueous electrolytic solution of the present invention. Specific examples thereof include metals, such as nickel-plated steel sheets, stainless steel, aluminum or aluminum alloys, magnesium alloys, nickel, and titanium; and a laminated film including a resin and aluminum foil. From the standpoint of a reduction in weight, metals, e.g., aluminum and an aluminum alloy, and laminated films are preferably used.

Examples of the case composed of the metal include a case having a sealed structure formed by fusion-bonding metal components to each other by laser welding, resistance welding, or ultrasonic welding; and a case having a caulked structure obtained by caulking metal components with a resin gasket. An example of the case composed of the laminated film is a case having a sealed structure formed by heat-sealing resin layers to each other. To enhance seal performance, a resin different from the resin constituting the laminated film may be interposed between the resin layers. In particular, when the resin layers are heat-sealed to each other through current collector terminals to form a sealed structure, a metal component is connected to a resin component. Thus, a polar group-containing resin or a modified resin having polar groups is preferably used as the resin interposed.

The case may have any shape, for example, a cylindrical shape, an angular shape, a laminate shape, a coin shape, or a large shape.

### EXAMPLES AND COMPARATIVE EXAMPLES

While the present invention will be described in further detail below by means of examples and comparative examples, the present invention is not limited to these examples so long as the present invention does not depart from the scope of the invention.

### [Examples 1 to 30 and Comparative Examples 1 to 14]

Examples 1 to 11, 15 to 17, 19, 29 and 30 are reference examples(not in accordance with the invention).

### <Preparation of Nonaqueous Electrolytic Solution>

In a dry argon atmosphere, sufficiently dried LiPF₆ was dissolved in each of the nonaqueous solvents shown in Tables 1 and 2 in a concentration of 1 mol·dm⁻³, and additives were dissolved in the solvents in concentrations described in Tables 1 and 2, thereby preparing a nonaqueous electrolytic solution (in Comparative Examples 1 and 11 to 14, no additive was used).

Vinylene carbonate (abbreviated as "VC" in Tables 1 and 2), fluoroethylene carbonate (abbreviated as "FEC" in Tables 1 and 2), and trans-4,5-difluoroethylene carbonate (abbreviated as "DFEC" in Tables 1 and 2) were used as the specific carbonates. Lithium difluorophosphate (LiPO₂F₂) was used as difluorophosphate.

The compositions of the nonaqueous solvents a to d shown in Tables 1 and 2 are as follows:
Nonaqueous solvent a: a mixture of ethylene carbonate (EC) and diethyl carbonate (DEC) (volume ratio, EC:DEC = 3:7);
Nonaqueous solvent b: a mixture of fluoroethylene carbonate (FEC) and diethyl carbonate (DEC) (volume ratio, FEC:DEC = 2:8);
Nonaqueous solvent c: a mixture of fluoroethylene carbonate (FEC) and dimethyl carbonate (DMC) (volume ratio, FEC:DMC = 2:8); and
Nonaqueous solvent d: a mixture of fluoroethylene carbonate (FEC) and diethyl carbonate (DEC) (volume ratio, FEC:DEC = 3:7).

### <Production of Positive Electrode>

First, 94% by weight of lithium cobaltate (LiCoO₂) serving as a positive-electrode active material, 3% by weight of acetylene black as a conductive material, and 3% by weight of polyvinylidene fluoride (PVdF) as a binder were mixed in an N-methylpyrrolidone solvent to form a slurry. The resulting slurry was applied to both surfaces of 15-µm-thick aluminum foil and dried in such a manner that a capacitance equal to 90% of the capacitance of a negative electrode was achieved. The coated foil was rolled with a press so as to have a thickness of 85 µm. The resulting foil was cut into a piece having a width of 65 mm and a length of 150 mm in terms of an active-material layer. The piece was cut into positive electrodes each having a width of 30 mm and a length of 40 mm in terms of the active material. The positive electrodes were dried at 80°C for 12 hours under reduced pressure before use.

### <Production of Negative Electrode>

### (Production of Silicon Negative Electrode)

As negative-electrode active materials, 73.2 parts by weight of silicon serving as a non-carbon material, 8.1 parts by weight of copper, and 12.2 parts by weight of an artificial graphite powder (trade name "KS-6", manufactured by Timcal) were used. Then, 54.2 parts by weight of an N-methylpyrrolidone solution containing 12 parts by weight of polyvinylidene fluoride and 50 parts by weight of N-methylpyrrolidone were added thereto. The mixture was mixed using a disperser to form a slurry. The resulting slurry was uniformly applied to 18-µm-thick copper foil serving as a negative-electrode current collector to form a negative electrode. The electrode was pressed so as to have a density of about 1.5 g·cm⁻³ and then cut into a negative electrode (silicon-alloy negative electrode) having a width of 30 mm and a length of 40 mm in terms of the active material. The resulting negative electrode was dried at 60°C for 12 hours under reduced pressure before use. In Tables 1 and 2, the negative electrode was expressed as "Si negative electrode" for convenience.

### (Production of Carbon Negative Electrode)

To 98 parts by weight of an artificial graphite powder KS-44 (trade name, manufactured by Timcal) serving as negative-electrode active materials, 100 parts by weight of an aqueous dispersion of sodium carboxymethylcellulose (with a sodium carboxymethylcellulose content of 1% by weight) as a thickener and 2 parts by weight of an aqueous dispersion of styrene-butadiene rubber (with a styrene-butadiene rubber content of 50% by weight) as a binder were added. The mixture was mixed using a disperser to form a slurry. The resulting slurry was applied to both surfaces of 10-µm-thick copper foil and dried. The coated foil was rolled with a press so as to have a thickness of 75 µm. The resulting foil was cut into a negative electrode having a width of 30 mm and a length of 40 mm in terms of the active material. The resulting negative electrode was dried at 60°C for 12 hours under reduced pressure before use.

### <Production of Secondary Battery>

The positive electrodes, the negative electrode (Si negative electrode or carbon negative electrode), and polyethylene separators were stacked in a sequence of positive electrode/separator/negative electrode/separator/positive electrode, thereby forming a battery element. The battery element was placed in a bag formed of a laminate film in which both surfaces of an aluminum film (with a thickness of 40 µm) were covered with resin layers in such a manner that terminals of the positive electrode and the negative electrode were protruded. Then 0.4 mL of the nonaqueous electrolytic solution was fed into the bag, followed by vacuum sealing to produce a sheet battery.

### <Evaluation of Battery: Cycle Test>

The sheet battery held between glass plates to improve contact between the electrodes was charged at a constant current corresponding to 0.2 C until the battery voltage reached a charge cut-off voltage of 4.2 V and discharged at a constant current corresponding to 0.2 C until the battery voltage reached a discharge cut-off voltage of 3 V at 25°C. This charge-discharge operation was repeated three cycles to stabilize the battery. Next, the battery was subjected to a cycle test in which the battery was subjected to 0.5-C-CCCV charge (0.05 C cut) and then discharge at a current corresponding to 0.5 C until the battery voltage reached 3 V. Here, the rate of a discharge capacity in the 100th cycle to a discharge capacity in the fourth cycle, i.e., (discharge capacity in 100th cycle/discharge capacity in 4th cycle), was defined as the cycle capacity retention rate. In the case where a cycle capacity retention rate when a nonaqueous electrolytic solution did not contain an isocyanate compound was defined as 1, a cycle capacity retention rate when a nonaqueous electrolytic solution contained the isocyanate compound, provided that other conditions were identical, was defined as the ratio of the cycle capacity retention rates.

Furthermore, the discharge capacity in the fourth cycle was defined as an initial capacity. In the case where an initial capacity when a nonaqueous electrolytic solution did not contain an isocyanate compound was defined as 1, an initial capacity when a nonaqueous electrolytic solution contained the isocyanate compound, provided that other conditions were identical, was defined as the ratio of the initial capacities.

Here, the term "1 C" indicates a current value when a battery is fully charged in one hour.

### <Evaluation Result>

Tables 1 and 2 show the test results.

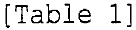

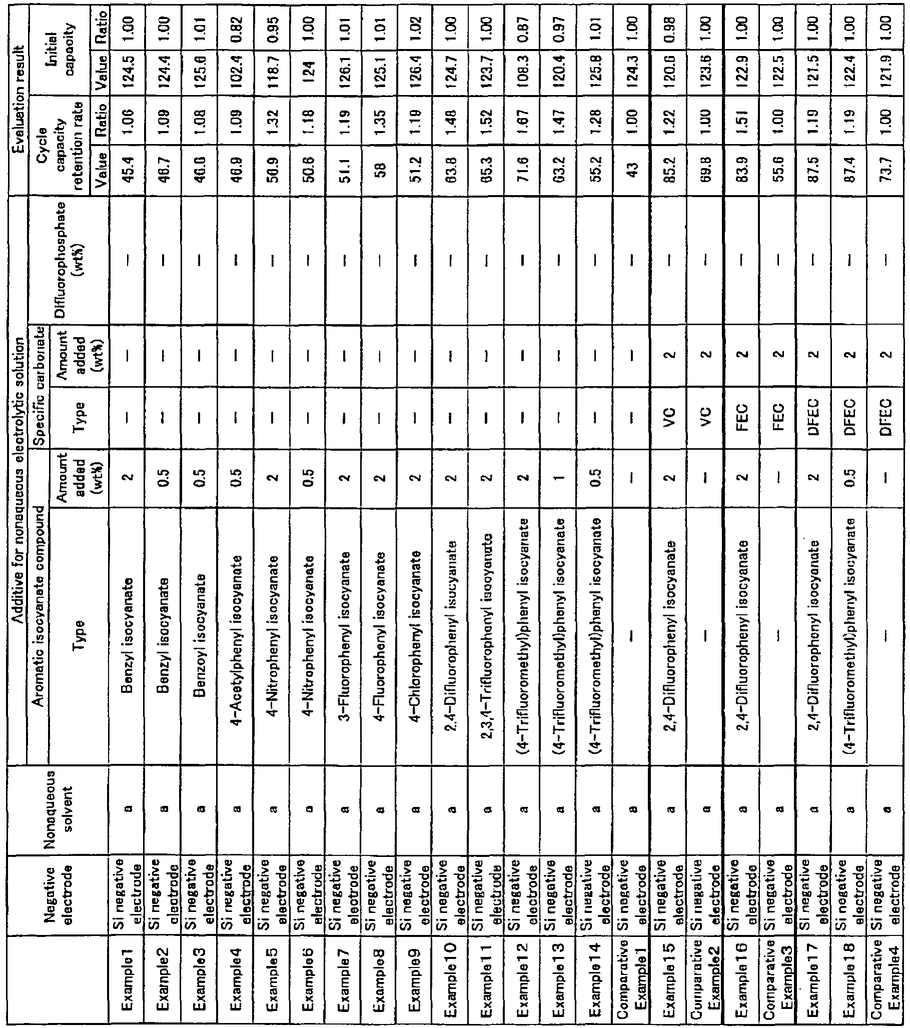

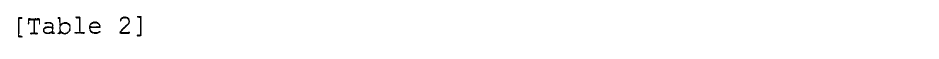

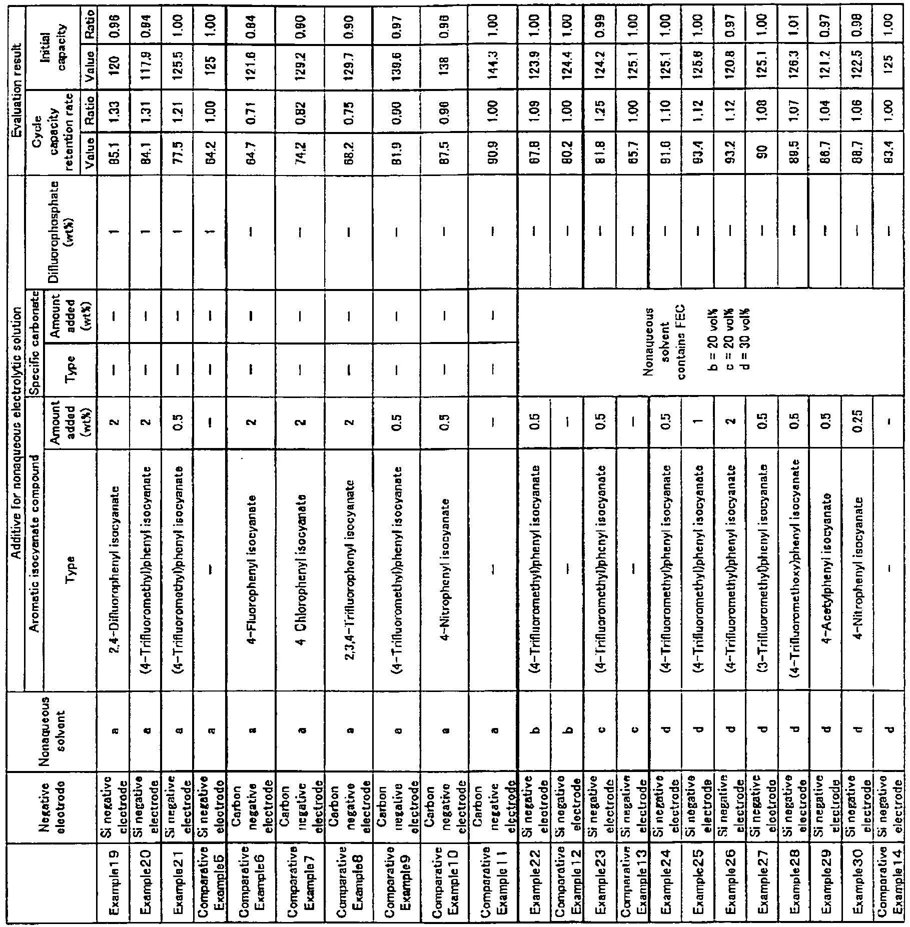

### <Discussion>

Tables 1 and 2 show the following.

In each of Examples 1 to 14 (the Si negative electrodes were used, and the nonaqueous electrolytic solutions contained the aromatic isocyanate compounds in concentrations shown in Tables 1 and 2), the cycle capacity retention rate was improved compared with Comparative Example 1 (the Si negative electrode was used, and the nonaqueous electrolytic solution did not contain an aromatic isocyanate compound). In the case of using the aromatic isocyanate compounds in which isocyanato groups were directly bonded to aromatic rings (Examples 4 to 14), a particularly excellent effect of improving the cycle capacity retention rate was provided. Furthermore, in the case where aromatic isocyanate compounds contained halogen atoms (Examples 7 to 14), the most satisfactory effect of improving the cycle capacity retention rate was provided.

Regarding the addition of the aromatic isocyanate compounds to the nonaqueous electrolytic solutions, comparisons of Examples 5, 6, and 12 to 14 show the following.

A large amount of the aromatic isocyanate compound added results in the enhancement of the effect of improving the cycle capacity retention rate but a reduction in the initial capacity. A small amount of the aromatic isocyanate compound added results in a reduction in the effect of improving the cycle capacity retention rate but an increase in the initial capacity. The results demonstrated that there is an optimum amount (concentration) of the aromatic isocyanate compound added in the present invention. In the case of using the aromatic isocyanate compounds, each aromatic isocyanate compound is preferably used in an optimum amount added.

In Example 15 (the Si negative electrode was used, and the nonaqueous electrolytic solution contained 2,4-difluorophenyl isocyanate and vinylene carbonate), a very large effect of improving the cycle capacity retention rate was provided compared with Comparative Example 2 (the Si negative electrode was used, and the nonaqueous electrolytic solution did not contain an aromatic isocyanate compound but contained vinylene carbonate) and Example 10 (the Si negative electrode was used, and the nonaqueous electrolytic solution contained 2,4-difluorophenyl isocyanate). This property is provided only by the presence of both of the aromatic isocyanate compound and the specific carbonate in the nonaqueous electrolytic solution.

In Example 16 (the Si negative electrode was used, and the nonaqueous electrolytic solution contained 2,4-difluorophenyl isocyanate and fluoroethylene carbonate), a very large effect of improving the cycle capacity retention rate was provided as described above, compared with Comparative Example 3 (the Si negative electrode was used, and the nonaqueous electrolytic solution did not contain an aromatic isocyanate compound but contained fluoroethylene carbonate) and Example 10 (the Si negative electrode was used, and the nonaqueous electrolytic solution contained 2,4-difluorophenyl isocyanate).

In Example 16 (the Si negative electrode was used, and the nonaqueous electrolytic solution contained 2,4-difluorophenyl isocyanate and trans-4,5-difluoroethylene carbonate) or Example 17 (the Si negative electrode was used, and the nonaqueous electrolytic solution contained (4-trifluoromethyl)phenyl isocyanate and trans-4,5-difluoroethylene carbonate), a very large effect of improving the cycle capacity retention rate was provided as described above, compared with Comparative Example 4 (the Si negative electrode was used, and the nonaqueous electrolytic solution did not contain an aromatic isocyanate compound but contained trans-4,5-difluoroethylene carbonate) and either Example 10 (the Si negative electrode was used, and the nonaqueous electrolytic solution contained 2,4-difluorophenyl isocyanate) or Example 14 (the Si negative electrode was used, and the nonaqueous electrolytic solution contained (4-trifluoromethyl)phenyl isocyanate).

In Example 19 (the Si negative electrode was used, and the nonaqueous electrolytic solution contained 2,4-difluorophenyl isocyanate and lithium difluorophosphate) or Example 20 or 21 (the Si negative electrode was used, and the nonaqueous electrolytic solution contained (4-trifluoromethyl)phenyl isocyanate and lithium difluorophosphate), a very large effect of improving the cycle capacity retention rate was provided as described above, compared with Comparative Example 5 (the Si negative electrode was used, and the nonaqueous electrolytic solution did not contain an aromatic isocyanate compound but contained lithium difluorophosphate) and either Example 10 (the Si negative electrode was used, and the nonaqueous electrolytic solution contained 2,4-difluorophenyl isocyanate) or Example 14 (the Si negative electrode was used, and the nonaqueous electrolytic solution contained (4-trifluoromethyl)phenyl isocyanate).

In each of Comparative Examples 6 to 10 (the carbon negative electrodes were used, and the nonaqueous electrolytic solutions contained the isocyanate compounds), each of the ratio of the cycle capacity retention rates and the ratio of the initial capacities was less than 1 compared with Comparative Example 11 (the carbon negative electrode was used, and the nonaqueous electrolytic solution did not contain an isocyanate compound). This is probably because a combination of the nonaqueous electrolytic solution of the present invention and the carbon electrode increases the resistance.

In Example 22 (the Si negative electrode was used, the solvent having an FEC/DEC ratio of 2/8 was used, and the nonaqueous electrolytic solution contained (4-trifluoromethyl)phenyl isocyanate), a large ratio of the cycle capacity retention rates was provided compared with Comparative Example 12 (the Si negative electrode was used, the solvent having an FEC/DEC ratio of 2/8 was used, and the nonaqueous electrolytic solution did not contain an isocyanate compound).

In Example 23 (the Si negative electrode was used, the solvent having an FEC/DMC ratio of 2/8 was used, and the nonaqueous electrolytic solution contained (4-trifluoromethyl)phenyl isocyanate), a large ratio of the cycle capacity retention rates was provided compared with Comparative Example 13 (the Si negative electrode was used, the solvent having an FEC/DMC ratio of 2/8 was used, and the nonaqueous electrolytic solution did not contain an isocyanate compound).

In each of Examples 24 to 30 (the Si negative electrodes were used, the solvents each having an FEC/DEC of 3/7, and the nonaqueous electrolytic solutions contained isocyanate compounds), a large ratio of the cycle capacity retention rates was provided compared with Comparative Example 14 (the Si negative electrode was used, the solvent having an FEC/DEC of 3/7 was used, and the nonaqueous electrolytic solution did not contain an isocyanate compound). Note that when some isocyanate compounds were used in certain concentrations, the ratios of the initial capacities were less than one. This is probably because there is an optimum amount of the isocyanate compound added, as described above.

The results demonstrate that the effect of the nonaqueous electrolytic solution of the present invention is provided even when different types and compositions of solvents are used.

### Industrial Applicability

According to the nonaqueous electrolytic solution of the present invention, it is possible to produce a long-life nonaqueous electrolyte secondary battery having excellent cycle characteristics. Thus, the battery can be suitably used in various fields such as electronic apparatuses for which nonaqueous electrolyte secondary batteries are used.

- 119 - Applications of the nonaqueous electrolytic solution for use in nonaqueous electrolyte secondary batteries and the nonaqueous electrolyte secondary battery according to the present invention are not particularly limited, and the battery can be used various known applications. Examples thereof include notebook type personal computers, pen-input personal computers, mobile personal computers, electronic book players, portable telephones, portable facsimile telegraphs, portable copiers, portable printers, headphone stereos, video movies, liquid-crystal television sets, handy cleaners, portable CDs, mini disks, transceivers, electronic pocketbooks, pocket calculators, memory cards, portable tape recorders, radios, backup power sources, motors, cars, motorcycles, small motor vehicles, bicycles, illuminators, toys, game appliances, clocks, stroboscopes, and cameras.

While the present invention has been described in detail with reference to the specific embodiments, it will be understood by the skilled person that various changes and modifications can be made without departing from the scope of the invention.

## Claims

1. A nonaqueous electrolytic solution for use in a lithium ion secondary battery including a positive electrode having a positive-electrode active material capable of storing and releasing lithium ions and a negative electrode having a negative-electrode active material containing at least one atom selected from the group consisting of Si, Sn, and Pb, the nonaqueous electrolytic solution comprising an electrolyte, a nonaqueous solvent, and an isocyanate compound having at least one aromatic ring in its molecule, **characterized in that** the isocyanate compound is at least one selected from 2-trifluoromethylphenyl isocyanate, 3-trifluoromethylphenyl isocyanate, 4-trifluoromethylphenyl isocyanate, 2-(2,2,2-trifluoroethyl)phenyl isocyanate, 3-(2,2,2-trifluoroethyl)phenyl isocyanate, and 4-(2,2,2-trifluoroethyl)phenyl isocyanate, wherein the nonaqueous electrolytic solution comprises a lithium salt as an electrolyte.

2. The nonaqueous electrolytic solution for use in a lithium ion secondary battery according to Claim 1, wherein the proportion of the isocyanate compound is in the range of 0.001% by weight to 20% by weight with respect to the total amount of the nonaqueous electrolytic solution.

3. The nonaqueous electrolytic solution for use in a lithium ion secondary battery according to Claim 1 or 2, the nonaqueous electrolytic solution further comprising at least one compound selected from the group consisting of carbonate, monofluorophosphate, and difluorophosphate, the carbonate having an unsaturated bond and/or a halogen atom.

4. The nonaqueous electrolytic solution for use in a lithium ion secondary battery according to Claim 3, wherein the carbonate having an unsaturated bond and/or a halogen atom is at least one selected from the group consisting of vinylene carbonate, vinylethylene carbonate, fluoroethylene carbonate, difluoroethylene carbonate, and derivatives thereof.

5. The nonaqueous electrolytic solution for use in a lithium ion secondary battery according to Claim 4, wherein the nonaqueous solvent has a fluoroethylene carbonate content of 10% by volume to 50% by volume.

6. A lithium ion secondary battery including a positive electrode having a positive-electrode active material capable of storing and releasing lithium ions and a negative electrode having a negative-electrode active material containing at least one atom selected from the group consisting of Si, Sn, and Pb, the lithium ion secondary battery comprising the nonaqueous electrolytic solution according to any one of Claims 1 to 5.

## Patentansprüche

1. Nicht-wässrige Elektrolytlösung zur Verwendung in einer Lithiumionen-Sekundärbatterie, einschliesslich einer positiven Elektrode mit einem positiven Elektrodenaktivmaterial, das in der Lage ist, Lithiumionen zu speichern und freizusetzen, und einer negativen Elektrode mit einem negativen Elektrodenaktivmaterial, enthaltend zumindest ein Atom, ausgewählt aus der Gruppe bestehend aus Si, Sn und Pb, wobei die nicht-wässrige Elektrolytlösung einen Elektrolyten, ein nicht-wässriges Lösungsmittel und eine Isocyanatverbindung mit zumindest einem aromatischen Ring in ihrem Molekül umfasst,
**dadurch gekennzeichnet, dass** die Isocyanatverbindung zumindest eine ist, ausgewählt aus 2-Trifluormethylphenylisocyanat, 3-Trifluormethylphenylisocyanat, 4-Trifluormethylphenylisocyanat, 2-(2,2,2-Trifluorethyl)phenylisocyanat, 3-(2,2,2-Trifluorethyl)phenylisocyanat und 4-(2,2,2-Trifluorethyl)phenylisocyanat, worin die nicht-wässrige Elektrolytlösung ein Lithiumsalz als Elektrolyten umfasst.

2. Nicht-wässrige Elektrolytlösung zur Verwendung in einer Lithiumionen-Sekundärbatterie gemäss Anspruch 1, worin der Anteil an der Isocyanatverbindung im Bereich von 0,001 bis 20 Gew.%, bezogen auf die Gesamtmenge der nicht-wässrigen Elektrolytlösung, beträgt.

3. Nicht-wässrige Elektrolytlösung zur Verwendung in einer Lithiumionen-Sekundärbatterie gemäss Anspruch 1 oder 2, wobei die nicht-wässrige Elektrolytlösung ferner zumindest eine Verbindung, ausgewählt aus der Gruppe bestehend aus Carbonat, Monofluorphosphat und Difluorphosphat, umfasst, wobei das Carbonat eine ungesättigte Bindung und/oder ein Halogenatom aufweist.

4. Nicht-wässrige Elektrolytlösung zur Verwendung in einer Lithiumionen-Sekundärbatterie gemäss Anspruch 3, wobei das Carbonat mit einer ungesättigten Bindung und/oder einem Halogenatom zumindest eines ist, ausgewählt aus der Gruppe bestehend aus Vinylencarbonat, Vinylethylencarbonat, Fluorethylencarbonat, Difluorethylencarbonat und Derivaten davon.

5. Nicht-wässrige Elektrolytlösung zur Verwendung in einer Lithiumionen-Sekundärbatterie gemäss Anspruch 4, wobei das nicht-wässrige Lösungsmittel einen Fluorethylencarbonatgehalt von 10 bis 50 Vol.% aufweist.

6. Lithiumionen-Sekundärbatterie einschliesslich einer positiven Elektrode mit einem positiven Elektrodenaktivmaterial, das in der Lage ist, Lithiumionen zu speichern und freizusetzen, und einer negativen Elektrode mit einem negativen Elektrodenaktivmaterial, enthaltend zumindest ein Atom, ausgewählt aus der Gruppe bestehend aus Si, Sn und Pb, wobei die Lithiumionen-Sekundärbatterie eine nicht-wässrige Elektrolytlösung gemäss irgendeinem der Ansprüche 1 bis 5 umfasst.

## Revendications

1. Solution électrolytique non aqueuse à utiliser dans une batterie secondaire aux ions de lithium comprenant une électrode positive ayant un matériau actif d'électrode positive capable de stocker et de libérer des ions de lithium et une électrode négative ayant un matériau actif d'électrode négative contenant au moins un atome choisi dans le groupe constitué par Si, Sn et Pb, la solution électrolytique non aqueuse comprenant un électrolyte, un solvant non aqueux et un composé d'isocyanate contenant au moins un cycle aromatique dans sa molécule, **caractérisée en ce que** le composé d'isocyanate est au moins un choisi parmi l'isocyanate de 2-trifluorométhylphényle, l'isocyanate de 3-trifluorométhylphényle, l'isocyanate de 4-trifluorométhylphényle, l'isocyanate de 2-(2,2,2-trifluoroéthyl)phényle, l'isocyanate de 3-(2,2,2-trifluoroéthyl)phényle, et l'isocyanate de 4-(2,2,2-trifluoroéthyl)phényle,
dans laquelle la solution électrolytique non aqueuse comprend un sel de lithium en tant qu'électrolyte.

2. Solution électrolytique non aqueuse à utiliser dans une batterie secondaire aux ions de lithium selon la revendication 1, dans laquelle la proportion du composé d'isocyanate est située dans la plage allant de 0,001 % en poids à 20 % en poids par rapport à la quantité totale de la solution électrolytique non aqueuse.

3. Solution électrolytique non aqueuse à utiliser dans une batterie secondaire aux ions de lithium selon la revendication 1 ou 2, la solution électrolytique non aqueuse comprenant en outre au moins un composé choisi dans le groupe constitué par un carbonate, un monofluorophosphate et un difluorophosphate, le carbonate contenant une liaison insaturée et/ou un atome d'halogène.

4. Solution électrolytique non aqueuse à utiliser dans une batterie secondaire aux ions de lithium selon la revendication 3, dans laquelle le carbonate contenant une liaison insaturée et/ou un atome d'halogène est au moins un choisi dans le groupe constitué par le carbonate de vinylène, le carbonate de vinyl-éthylène, le carbonate de fluoroéthylène, le carbonate de difluoroéthylène, et leurs dérivés.

5. Solution électrolytique non aqueuse à utiliser dans une batterie secondaire aux ions de lithium-ion selon la revendication 4, dans laquelle le solvant non aqueux présente une teneur en carbonate de fluoroéthylène de 10 % en volume à 50 % en volume.

6. Batterie secondaire aux ions de lithium comprenant une électrode positive ayant un matériau actif d'électrode positive capable de stocker et de libérer des ions de lithium et une électrode négative ayant un matériau actif d'électrode négative contenant au moins un atome choisi dans le groupe constitué par Si, Sn et Pb, la batterie secondaire aux ions de lithium comprenant la solution électrolytique non aqueuse selon l'une quelconque des revendications 1 à 5.
